# EUROPEAN PATENT SPECIFICATION

(11) **EP 2 407 900 B1**
(45) Date of publication and mention of the grant of the patent: **03.07.2013**
(21) Application number: 11174430.6
(22) Date of filing: 18.07.2011
(51) Int. Cl.: G06F 17/30

(54) **Batch prospective searching**
Prospektive Batchsuche
Recherche prospective de lots

(30) Priority: 16.07.2010 US 365227 P
(43) Date of publication of application: 18.01.2012
(73) Proprietor: Google Inc., Mountain View, CA 94043 (US)
(72) Inventor: Dybdahl, Haakon, 8810 Horgen (CH); Grimm, Henrik, 8002 Zürich (CH)
(74) Representative: Schley, Jan Malte

(56) References cited:
- US-A1- 2008 235 210
- US-A1- 2009 063 473
- US-B1- 7 725 453
- UTKU IRMAK ET AL: "Efficient query subscription processing for prospective search engines", PROCEEDINGS OF THE 15TH INTERNATIONAL CONFERENCE ON WORLD WIDE WEB , WWW '06, 1 January 2006 (2006-01-01), page 1037, XP55009038, New York, New York, USA DOI: 10.1145/1135777.1136003 ISBN: 978-1-59-593323-2

## Description

### BACKGROUND

This specification relates to performing prospective searches.

Search engines generally attempt to provide users with fast, accurate, and timely search results. For example, search engines may gather information and then index the gathered information. Upon a subsequent receipt of a query from a user, the search engine accesses the indexed information to determine particular portions of the information that are deemed to most closely match the corresponding query. Such search engines may be referred to as retrospective search engines, because they provide search results using information obtained before the corresponding query is received.

Other search engines may be referred to as prospective search engines, which provide search results to a user based on information that is obtained after a query is received. For example, a user may submit a query that is stored by the prospective search engine. Later, the prospective search engine may receive information that is pertinent to the stored query, in which case the search engine can notify a user that the information has been received or provide the received information to the user. For example, the query may act as a request to subscribe to certain information, and the prospective search engine acts to publish such matching information to the user when available, based on the subscribing query.

Prospective searching can be used to provide a publish/subscribe-type (or "pub/sub") service. Pub/sub services are typically provided according to a pub/sub messaging paradigm, where messages published on a system are characterized into classes. Subscribers can subscribe to one or more of these classes and receive messages that have been characterized into the subscribed classes. This is also sometimes referred to as message filtering. Messages are categorized, or filtered, commonly according to two forms-topic-based filtering and content-based filtering. Topic-based filtering involves categorizing a message according to particular topics, where the subscriber subscribes to and receives messages categorized into one of these topics. Content-based filtering, on the other hand, involves delivering messages to a subscriber that include content corresponding to a set of constraints designated by the subscriber. For instance, a subscriber may be interested in receiving messages relating to professional baseball. Content-based filtering processes messages and attempts to identify, from the content of those messages, which messages relate to specific predefined terms in a predefined query or subscription.

Patent publication US 7725453 B1 teaches a search system using first and second search index.

### SUMMARY

This specification describes technologies relating to performing batch prospective searches of a corpus of predefined queries for a batch of electronic documents.

The object of the invention is solved by the features of the independent claims. Further embodiments are the subject matter of the dependent claims. For each query in the plurality of queries, one or more tokens included in the query can be identified. For each identified token specific electronic documents can be identified in the plurality of electronic documents that include content associated with the identified token. A particular electronic document can be determined to be a match for a particular query in the plurality of queries by determining, based on the index, that the particular electronic document includes an associated set of tokens that correspond to parameters associated with the particular query. For each query in the plurality of queries, the electronic documents of the plurality of electronic documents matching the query can be determined. One or more tokens can be identified in a particular query in the plurality of queries. The index can be used to identify a set of token pointing lists for the particular query, wherein each token pointing list corresponds to a respective identified token in the particular query and identifies electronic documents having content associated with the respective identified token. Token pointing lists in the set of token pointing lists can be compared for the particular query to determine whether one or more electronic documents identified in the set of token pointing lists is common across token pointing lists in the set of token pointing lists. A particular query can be determined to match electronic documents identified as common across token pointing lists in the set of token pointing lists. Comparing token pointing lists can include determining that a first pointing list in the set of token pointing lists, corresponding to a first token, has fewer associated matched electronic documents than other token pointing lists in the set of token pointing lists, and determining, for each electronic document identified in the first pointing list, whether other token pointing lists in the set of token pointing lists also includes the electronic documents identified in the first pointing list. Comparing token pointing lists can also include determining that at least one electronic document identified in the first pointing list does not match the particular query by identifying at least one other token pointing list in the set of token pointing lists that does not identify the electronic documents identified in the first pointing list.

Further, these and other examples can each optionally include one or more of the following features. At least a first and second core of a multi-core processor can each perform, in parallel, at least a portion of generating an index for the plurality of electronic documents and using the index to determine whether one or more queries in the plurality of queries match each electronic document. Generating an index can include generating at least two, non-overlapping indexes including a first index and a second index, wherein the first core generates the first index and the second core generates the second index. Using the index to determine whether one or more queries in the plurality of queries match electronic document in the plurality of documents can includes assigning identification of matches for a first subset of the plurality of queries to the first core and assigning identification of matches for a second subset of the plurality of queries to the second core. The first and second subsets can be non-overlapping portions of the plurality of queries. The first core can use the index to determine whether queries in the first subset of the plurality of queries match electronic document in the plurality of documents. The second core can use the index to determine whether queries in the second subset of the plurality of queries match electronic document in the plurality of documents. Determining whether one or more queries in the plurality of queries match electronic document in the plurality of documents can include identifying, for each query in the plurality of queries, one or more tokens included in the query, identifying for each identified token in the query, electronic documents that include content associated with the identified token, and determining that a particular electronic document is a match for a particular query in the plurality of queries by determining, based on the index, that the particular electronic document includes an associated set of tokens that correspond to parameters associated with the particular query. Tokens associated with content of a particular electronic document can be tokens included in the content of the electronic document. A message can be sent, to a remote computing device, identifying that a first electronic document matches the first query. The first query can be associated with a first user subscription for electronic documents relating to the first query.

Still further, these and other examples can each optionally include one or more of the following features. At least one of the one or more tokens associated with the corresponding electronic document can be scored for each electronic document in the plurality of electronic documents. An instance of a particular token, associated with content of a particular electronic document, can be scored based at least in part on the position of the particular token within the particular electronic document. An instance of a particular token, associated with content of a particular electronic document, can be scored based at least in part on how often the particular token appears within the electronic document.

In general, another aspect of the subject matter described in this specification can be embodied in systems that include at least one server hosting an index of a plurality of queries directed to one or more electronic resources, and a prospective search engine, hosted by at least one server including a processor. The prospective search engine can include a document indexing tool adapted to identify a batch of electronic documents, including a plurality of electronic documents, and build an index for the batch, the index including, for each one of the plurality of electronic documents, one or more index records identifying at least one token associated with content of the corresponding electronic document. The prospective search engine can further include a prospective batch matching tool adapted to identify, for each query in the plurality of queries, one or more tokens included in the query, determine for each identified token specific electronic documents in the plurality of electronic documents that include content associated with the identified token, and determine that a particular electronic document is a match for a particular query in the plurality of queries by determining, based on the index, that the particular electronic document includes an associated set of tokens that correspond to parameters associated with the particular query.

Particular embodiments of the subject matter described in this specification can be implemented so as to realize one or more of the following advantages. An improved prospective search algorithm targeting the prospective search of a batch of documents permits high-bandwidth prospective searching of electronic documents, including prospective searches against very large query corpuses. Prospective search results can be returned with relatively low latency, as the described prospective search engine uses very little temporary memory per document compared to typical traditional prospective search algorithms. Additionally, the described prospective search engine can call query corpus data structures (e.g., query indexes) used by the search engine less frequently than in traditional prospective search algorithms. Moreover, the improved prospective search engine described below can be adapted for parallel processing by multiple parallel processors, including cores of a multi-core processor device, introducing additional efficiencies into the improved prospective search.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates a schematic diagram of an example prospective search service system adapted to perform prospective searches on document batches.

FIG. 2 is a schematic diagram of an example prospective search service engine.

FIG. 3A is a flow diagram illustrating an example technique for performing a prospective search.

FIG 3B is a flow diagram illustrating an example technique for using an index to determine that one or more queries match electronic documents in the plurality of electronic documents.

FIG 3C is a flow diagram illustrating an example technique for identifying electronic documents in a batch for a particular query.

FIG. 3D is a flow diagram illustrating an example technique for performing a prospective search using a multi-core processor.

FIGS. 4A-4D illustrate example implementations of a prospective search on an example batch of documents.

FIG. 5 illustrates an example implementation of a parallel prospective search on the example batch of documents of FIGS. 4A-4D.

FIG. 6 is a flow diagram illustrating an example technique for performing a prospective search utilizing scoring.

FIG. 7 illustrates an example implementation of a prospective search, including scoring tokens in a batch of documents.

Like reference numbers and designations in the various drawings indicate like elements.

### DETAILED DESCRIPTION

Prospective searching can be resource-intensive, particularly where the prospective searching is performed in quasi-real time on electronic documents identified, received, or streaming into a system. Typically, as an electronic document is received or identified, and a prospective search based on the electronic document is performed, each query in the query corpus is searched to see if it maps to and "matches" the electronic document. As the volume of electronic documents received or streamed into a system increases, the processing resources required to maintain search performance likewise increases.

As described in this specification, a prospective search algorithm can perform prospective searches on batches of electronic documents. The algorithm can include identifying a batch of documents to be matched against a query corpus. While typical prospective search engines utilize a search index structure based on the queries in a query corpus, the described prospective search algorithm uses an index that is constructed from the tokens included in the documents in the batch. The index can then be used to match documents to queries in the corpus. Rather, than searching the queries based on each electronic document individually, the documents can be searched as a batch. This approach allows searching of a high bandwidth of data (e.g., batches of documents) against a large set of queries without requiring significant increases in processing resources. Additionally, in instances where the query token match rate is low, the execution time can be practically independent of batch size as look-ups are done on a batch index for an entire batch of document. Additional efficiencies and advantages will be appreciated as described in more detail below. In practice, the improved prospective search algorithm described herein can scale nearly independent of the size of the query corpus and handle query corpuses that include millions of queries. Additionally, the improved prospective search engine can permit efficient prospective searching of large, demanding query corpuses in response to high-volume document streams (e.g., on the order of tens of thousands of documents per second).

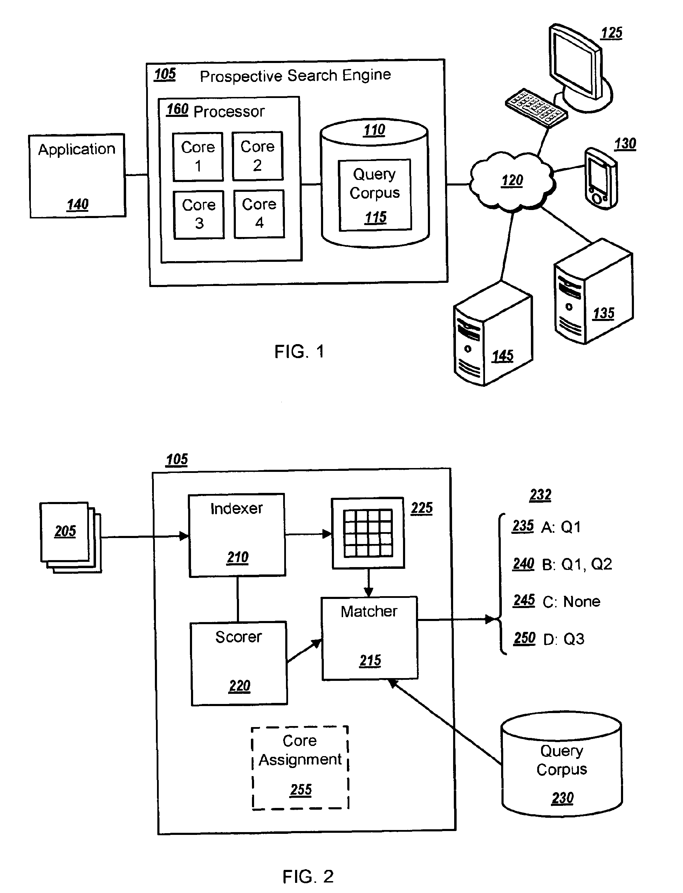

FIG. 1 illustrates a schematic diagram of an example prospective search service system 100 adapted to perform prospective searches on document batches. The system 100 can include a prospective search engine 105 using an improved prospective search algorithm. The prospective search engine 105 can be hosted by or implemented as one or more computing devices, including server farms and distributed networks, e.g., in a cloud computing environment. These computing devices can include processors and memory adapted to execute and store code implementing the search engine 105. Additionally, the search engine 105 can include one or more memory devices 110 storing a corpus 115 of queries that can be searched in a prospective search performed by the prospective search engine 105. One or more consumers of prospective search services can be in communication with the prospective search engine 105 over a network 120. Consumers can include user client computing devices 125, 130, including handheld and mobile computing devices (e.g., 130) as well as other applications and services hosted by servers 135, 140 remote from (e.g., 135), or integrated with (e.g., 140) the prospective search engine 105. In a prospective search, the subject of the search can be electronic resources, e.g., electronic documents, received by or otherwise identified by the prospective search engine 105. Electronic documents can be identified or received from computing devices (e.g., 125, 135, 145) remote from the prospective search engine. In other instances, documents can be located and identified in memory of (or served by) computing devices (e.g., 140) associated with the prospective search engine.

Electronic documents received by the prospective search engine 105 can be grouped into or identified as a batch of electronic documents, where the batch includes a plurality of electronic documents. In one example, the prospective search engine 105 can request or crawl a document server 145, e.g., a web server that is known from historical data to include frequent updates, and identify or request a plurality of documents from the server 145. As documents are received or identified, they are batched together with other documents to be prospectively-searched together as a batch. Additionally, the prospective search engine 105 can be adapted to handle dynamically-changing batch sizes. For instance, the prospective search engine 105 can continuously receive new documents for searching and hold them in a queue while indexing and matching steps are running for a previously received batch of documents. Documents can be added to the index, and corresponding batch, as they are received until all incoming documents have been processed, the allocated batch index memory is full, a particular latency threshold is reached, or some other limit is reached. Once the use of the index is complete and the query-document matches identified, index memory can be dedicated to new indexes for subsequent document batches. In some instances, handling and indexing incoming document in this fashion allows latency of the search engine to be low when the rate of new incoming documents is low. If the document rate goes up, the latency may increase to be capable of processing the higher load (i.e., by increasing batch size). Documents received for prospective searching can vary, sometimes widely, in size and rate, but this particular approach can allow processing resources to be effectively utilized to handle spikes in incoming documents.

In other instances, the prospective search engine 105 can receive documents from more than one source (e.g., 135 and 145) and group the documents received from the sources into a single batch. In some instances, documents can be received or identified from multiple sources substantially simultaneously, for example, by two or more web crawlers feeding documents to the prospective search engine 105, and grouped into a batch. Batches of electronic documents can then be processed by the prospective search engine to find one or more queries in a corpus 115 matching certain electronic documents in the batch. Finding matching query-document matches satisfying a particular batch prospective search can trigger further processing by the prospective search engine 105, or a consumer of prospective search services (e.g., 125, 130), including certain prospective-search-related events. For example, identifying a newly identified document as a match to a particular query can trigger a pub/sub event, such as a notification to a user that a particular document has been identified matching a user's subscription (i.e., associated query included in the corpus).

As shown in FIG 1, in some instances a processor 160 used to implement the prospective search engine 105 can be a multi-core processor 160. A multi-core processor can implement multiprocessing within a single physical package. Generally, the core of a processor is the entity of the processor adapted to read and execute computer-readable instructions. A multi-core processor is a processor with two or more independent cores (e.g., 2, 4, 6, 16 independent cores, etc.). As an example, a multi-core processor can be implemented as an integrated circuit including two or more individual processors (the "cores" in this sense). In other examples, cores in a multi-core processor 160 can be integrated onto a single integrated circuit or onto multiple dies in a single chip package. Cores in a multi-core processor 160 can share memory, memory busses, cache (including last level cache), etc. and can pass messages and engage in shared memory inter-core communication. Cores in a multi-core processor 160 can be tightly or loosely coupled, depending on their intercommunication and memory storage capabilities and design. A multi-core processor can also include "many-core" processors that typically include 20 or more cores implemented, in some instances, as a network on a chip. Through the use of a multi-core processor, performance of steps in an improved prospective search algorithm can be divided among the processor cores and performed in parallel, thereby improving the efficiency and performance of a search.

In some instances, parallel execution of steps of the prospective search algorithm can be accomplished using parallel processing computing devices, in addition to or in lieu of a multi-core processor 160. For instance, the prospective search engine 105 can be implemented or scaled across multiple machines. Each machine can store and/or handle searching for a subset of the query corpus, such as in examples where the query corpus is too large to be efficiently handled by a single machine. In such an example, each document in the batch is sent to all machines to be searched against the machine's respective query corpus subset. Additionally, in implementations of a prospective search engine 105 employing multiple machines, the documents received in a batch can be split among the machines for processing against a query corpus, for instance, where the rate of incoming documents is too high to be handled by a single machine. Moreover, by using several replicas of the search engine implemented on multiple machines, fault tolerance can be improved allowing replicas to handle the load of a machine in a fault condition.

FIG. 2 is a schematic diagram of an example prospective search engine 200. A batch of documents 205 can be received or identified as the basis of a batch prospective search. The prospective search engine 105, in some implementations, can include an indexing tool 210, a matching tool 215, and a scoring tool 220. The indexing tool 215 can generate an index 225 of the tokens included in each electronic document in the batch. The matching tool 215 can use the index 225 to compare the tokens of all documents in the batch 205 against the tokens (or query terms) in each query in a query corpus 230. In some instances, a scoring tool can score certain tokens identified in a particular document of the batch 205. Scoring can be optional. In some instances, tokens of a document are scored in connection with building of the index 225 by the indexing tool. In such an example, token scores can be included in the index 225 as determined by the scoring tool 220. In another example, tokens are scored based on the index 225. Scores can be used by the matching tool in connection with determining whether particular documents in the batch 205 are a "match" to a given query. In some examples, a score can be used to limit the number of prospective search results 232 returned for a particular query. For example, queries with tokens matching tokens scored higher in a particular document, can be returned in favor of other queries with matching tokens but lower scores. Based on the matching performed by the matching tool 215, a set of prospective search results 232 can be returned for each document (e.g., 235, 240, 245, 250) in the batch 205. In implementations of the search engine 105 utilizing a multi-core processor, the search engine 105 can additionally include a core assignment coordinating tool 255 adapted to assist in assigning tasks of the prospective search to the cores of the processor, to allow the multi-core processor to perform parallel prospective searching.

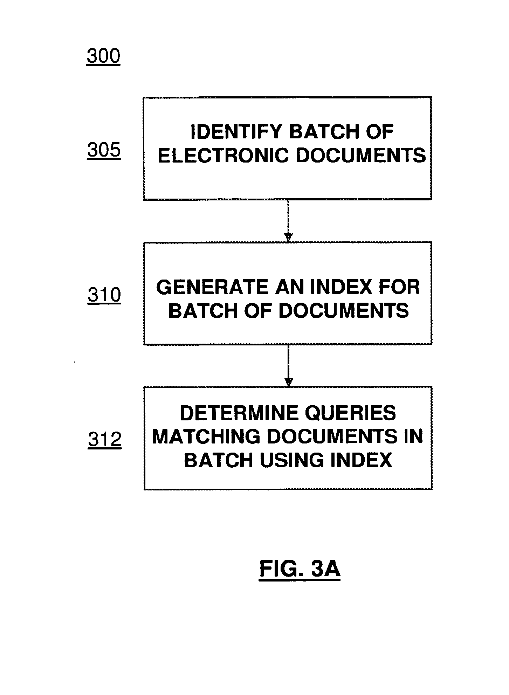

FIG. 3A is a flow diagram illustrating an example technique for performing a prospective search. A plurality of electronic documents can be identified 305 that are to be prospectively searched against a plurality of pre-defined queries, e.g., a query corpus. An index can be generated 310 for the plurality of electronic documents. Generating the index 310 can include identifying a plurality of tokens associated with content of electronic documents in the plurality of electronic documents. The resulting index can include multiple index records, with each index record each corresponding to a token in the plurality of tokens and identifying one or more electronic documents, in the plurality of electronic documents, having content associated with the token. The index can be used to determine 312, for each electronic document in the plurality of electronic documents, whether one or more queries in the plurality of queries match the electronic document.

The batch index is a structure that can be searched efficiently to identify each document in the batch of documents that includes, or has content associated with, a particular token. The index maps a list of matching documents given a token. For instance, the index can be a hash table and allow for all of the documents in the batch including a particular token to be quickly and easily identified. By using hash structures for storing the index, the complexity of looking up a token can make the complexity of building the index linear to the number of documents and tokens. In some instances, each token can have an index with the IDs of the identified documents in the document batch associated with the token included in the token's index. In some instances, the token index(es) can be striped, such as a striped hash table. The complexity of building a batch index can be a function of the number of tokens that need to be inserted in the index. The time per document, however, can be nearly independent of the index size. Indeed, in some instances (e.g., with small indexes), cache effects can result in shorter processing time.

An example indexing algorithm is as follows:

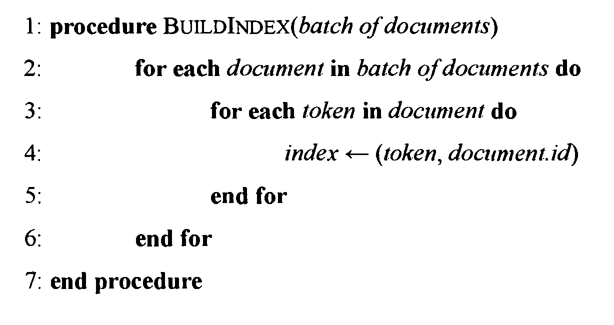

Determinations of matching queries using a batch index can be carried out using the following algorithms or other similar algorithms:
**Algorithm 2**: The Sequential Query Matching Algorithm. The tokens documents is a mapping from every token to the list of documents matching the token: 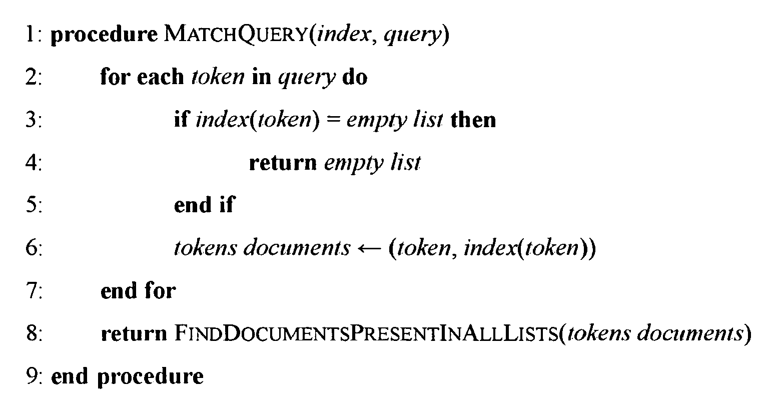
Algorithm 3: Matching many queries: 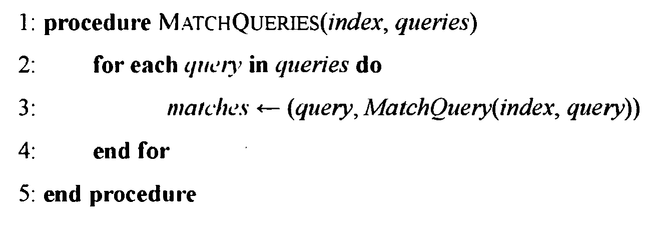
Algorithm 4: The Algorithm for Finding Matching Documents. The tokens documents is a list of tokens and for each token, a list of matching document ids (sorted):

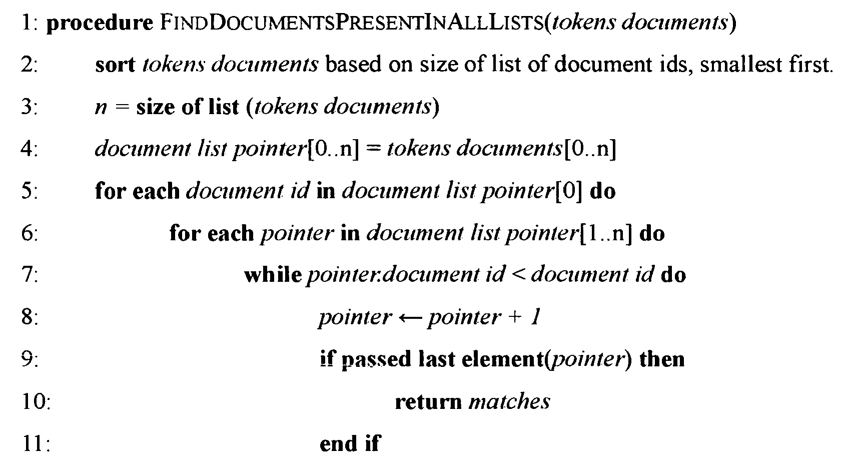

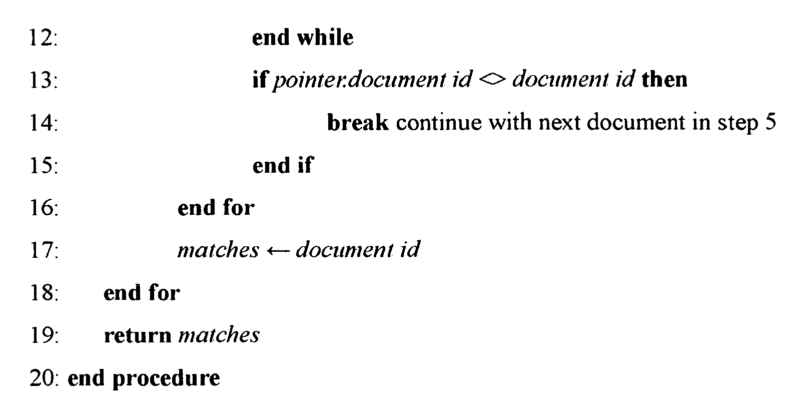

A determination that one or more of the electronic documents in a batch of documents matches a particular query can be used in connection with other web-based, mobile, or other software applications. For instance, a particular query can correspond to a standing, predefined search request by a user of a social networking application to identify other members of the social networking application that share particular interests with the user. The social networking application can store this query, as well as a plurality of other such standing queries, in some cases thousands or millions. In this particular example, the batch of electronic documents can be a subset of all of the member pages of the social networking application, for instance, those member pages identified as having been recently updated by the member associated with the page. A prospective search can be run on the set of recently updated member pages to see if any of these recently updated member pages match one of the stored queries relating to member pages. If a match is found, a message can be sent to the "owner" of the query alerting the owner that matching documents, in this case member pages, have been found. The message can be an email, a text message, instant message, feed message, or other communication and include a link to the matching documents, a copy of the matching documents, or another identification of matching documents. In the current example of a social networking application, the message can be in the form a "friend suggestion," alerting the owner of the query of other users of the social networking application, corresponding to the matched member pages, that have potentially matching interests with the query owner. Social networking is one example of uses for batch prospective searches. Additionally, other uses of, and ways of communicating document-query matches can be employed, as appropriate.

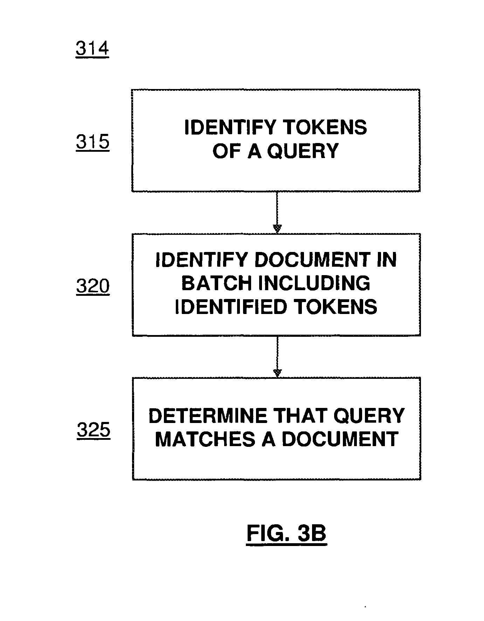

FIG. 3B is a flow diagram 314 illustrating an example technique for using an index to determine that one or more queries match electronic documents in the plurality of electronic documents. For instance, for each query in a plurality of queries of a corpus to be prospectively searched, one or more tokens can be identified 315 as included in each respective query. For each identified 315 token in the corresponding query, electronic documents in the plurality of electronic documents that include content associated with the respective identified token can be identified 320 using the batch index (such as created at 310). It can then be determined 325 that a particular electronic document is a match for a particular query in the plurality of queries by determining, based on the index, that the particular electronic document includes an associated set of tokens that correspond to parameters associated with the particular query.

Parameters can be defined by the corresponding query, the prospective search engine, or particular search engine settings, including user-defined settings. Parameters can require that a particular document include content matching each and every token of the query to determine that the particular document matches the query. In other instances, matching parameters can specify a certain match threshold, such a minimum number or percentage of query tokens that must be included in matching documents. In some instances, tokens can be scored, with higher-scored tokens corresponding to tokens that are of particular importance or prominence within a query or a document. Match parameters can set forth an aggregate token score for tokens present in the document or require that the highest scored tokens within a query be included in the document. Other match parameters can also be used and defined to set forth the conditions for determining that a particular electronic document is a match for a particular query.

In the example of FIG 3B, identifying the tokens in a particular query can include looking-up the particular query's tokens in a query index. Unlike some traditional prospective search engines using complex subscription indexes or query trees, some instances of a query index of the improved prospective search system can be as simple as a list of the queries and their respective tokens. In some instances, the query listing can be a hash map. Additionally, queries can be stored in the query index in any order. Simple query listings allows straightforward and efficient insertion, replacement, modification, and deletion of queries. Such simplicity can be realized because some implementations of the prospective search algorithm do not depend on query token overlap at the query index level. Query indexes can be stored continuously in memory of a computing system implementing the prospective search engine.

Basing a prospective search on plurality of documents organized as a batch and conducting the search using an index of the plurality of documents and their tokens, can introduce efficiencies over traditional prospective search engines. For instance, a batch index can be a hashmap or look-up table that can be used to identify all documents in the batch that include a particular token of a query in a query corpus. For instance, the index can be an index of all content in each document, similar to indexes maintained for a retrospective search corpus. For each query in the query corpus, tokens of the query can be identified and look-ups performed on the batch index to identify those documents that include the query. In some instances, the batch index can include a plurality of token-specific indexes dedicated to each identified token. Searching the batch index on a token-by-token basis can be an efficient and quick process and can allow the batch prospective search engine to quickly weed-out queries as potential matches for documents in the batch.

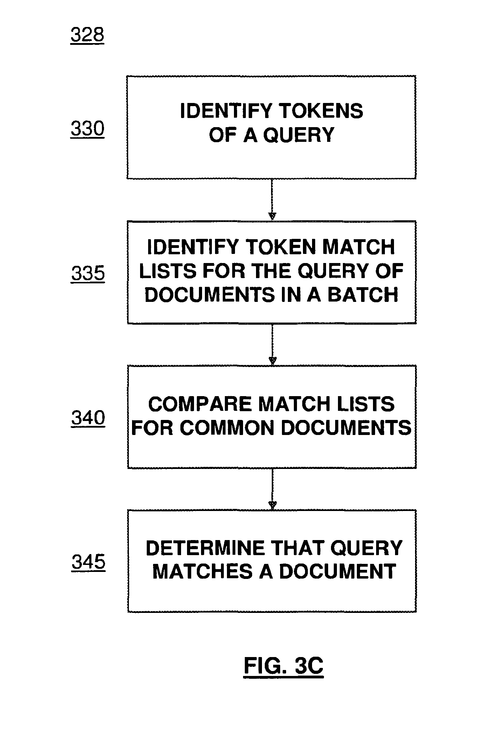

FIG. 3C is a flow diagram 328 illustrating an example technique for identifying electronic documents in a batch for a particular query. For instance, a set of tokens can be identified 330 within the particular query in a query corpus. A batch index can be used to identify 335, a set of token pointing lists for the particular query, each token pointing list corresponding to a respective identified token in the particular query and identifying electronic documents having content associated with the respective identified token. Token pointing lists in the set of token pointing lists for the particular query can be compared 340, or "intersected," to determine whether one or more electronic documents identified in the set of token pointing lists is common across token pointing lists in the set of token pointing lists. It can then be determined 345 that the particular query matches electronic documents identified as common across token pointing lists in the set of token pointing lists.

In some instances, pointing lists can be generated as temporary data structures listing the documents in the batch identified as including content corresponding to the pointing list's token. In other instances, the pointing lists structure can be the batch index itself, such as token-specific indexes or pointers to token records in the batch index. In some instances, the pointing lists of the query's tokens can be ordered prior to "intersecting" the pointing lists. While, in some instances, pointing lists can be compared without ordering the pointing lists, ordering pointing lists can increase the efficiency of the prospective search. For instance, pointing lists in a query's set of pointing lists can be ordered according to the number of documents identified in each pointing list. In essence, ordering pointing lists can determine the least common denominator of documents matching tokens in the query and minimize the number of pointing lists comparisons 340 that are necessary to identify 345 the common documents among the pointing lists. The technique illustrated in flow diagram 328 can be repeated for each query in a query corpus to complete the prospective search of the document batch against the query corpus.

In addition to, or as an alternative to, ordering pointing lists 355 for a query, other techniques can be employed to enhance the efficiency of the query-document matching algorithm. For instance, tokens in the query can be sorted based on their uniqueness or usefulness, i.e., the likelihood that the token will not be included in multiple documents. Accordingly, pointing lists for such "unique" tokens can be ordered ahead of other pointing lists during the comparison step to potentially limit the number of comparison look-ups required to determine that common documents exist among a query's pointing lists. In some instances, a subset of queries can be grouped into clusters during query-document matching, based on the identification of tokens shared among the subset of grouped queries. Using the identification of these common tokens among the subset of queries, comparisons for these similar tokens can be processed only once. For instance, if a particular cluster token does not match any documents in the batch, it can be determined that no documents in the batch match any of the queries in the cluster. Queries can also be clustered according to locality, such as in instances where queries are matched in parallel by a multi-core processor. For instance, the first lookup, or comparison, for a query could be directed to the index or indexes local to the core processing the query.

Various logic can be used to determine whether particular document tokens correspond to similar query tokens. In some instances, a token included within a document can be determined to correspond to a query token if the document token is identical to the query token. In other instances, a document's token can be determined to correspond to a query token even where the queries are not identical. For instance, the logic can identify alternate conjugations, alternate spellings, common misspellings, aliases, synonyms, abbreviations, short forms, or other correlating features between a query token and content included in a document, such as a word, name, or phrase. The correlation between the document's content and particular token can serve as the basis for determining that the document's content matches or corresponds to a query's token. Scoring of tokens in the queries or the documents can also be considered, for example, scores that indicate the importance (e.g., rarity or uniqueness) of a particular token or scores that relate to the strength of the correlation between a particular document token and query token (i.e., exact matches being scored higher).

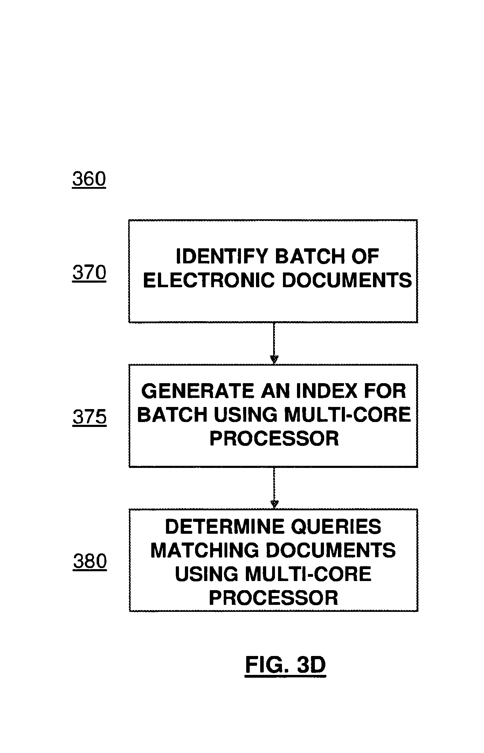

FIG. 3D is a flow diagram 360 illustrating an example technique for performing a prospective search using a multi-core processor. A plurality of electronic documents can be identified 370 that are to be prospectively searched against a plurality of queries. An index can be generated 375 for the plurality of electronic documents, using the multi-core processor. For instance, at least a first and second core of a multi-core processor can each build, in parallel, at least a portion of the batch index. For instance, multiple, parallel indexes can be built, in parallel, for a single document batch, each parallel index built by a different core. Each core can take a subset of the documents in the batch and construct an index recording associations between tokens in the subset of documents and particular documents in the subset of documents. Each parallel index can then include records for a non-overlapping subset of the electronic documents included in the document batch. The cores of the multi-core processor can then use the index(es) to determine 380, for each electronic document in the plurality of electronic documents, whether one or more queries in the plurality of queries match the respective electronic document. For instance, at least a first and second core of a multi-core processor can each be responsible for determining matches for queries in a particular, non-overlapping subset of a query corpus.

In some examples, building a batch index in parallel 375 using multiple processor cores or computing devices can include the building of one or more indexes for the batch. In instances where the cores build a single index, many cores access the index simultaneously. This implementation, however, can require protecting the index against two or more cores modifying the index at the same time. A single coarse lock protecting the index can limit processing to one thread inserting a single token at a time. Such an implementation, however, can lead to poor performance and bottlenecks. In an alternative example, many indexes can be built for the document batch, for example, with specific indexes built for specific tokens. A hash of the token can be used to determine the index to which it belongs. In multi-index examples, each index can be protected by its own lock, or by striping the index. For instance, a token-specific index can be built according to the following example:
*Mutex mutex[stripes];*
*hashmap< Token, vector<DocId>> index[stripes]*

In examples employing the building of multiple, parallel indexes, the list of document IDs per token may need to be sorted for performance reasons. For example, finding intersections of sorted lists can, in some instances, be faster than finding intersections of non-sorted lists. For instance, while utilizing multiple cores to build batch indexes in parallel, several documents may be inserted into the index at the same time. In some examples, the tokens in a document can be split among different cores and/or indexes. A hash function can be used to determine which processor or core should receive and build an index storing associations for each respective token. Additionally, a processor using the multiple parallel indexes to determine matches for queries in the query corpus need only identify the token corresponding to the specific index (or "list") document to identify the proper index or list to use in matching the query to documents in the batch index. Indexes need not be locked while using the indexes during the query-document matching step as the processors are simply reading, and not altering, the indexes during this step.

Sorting all lists, or token-specific indexes, after the insertion of document IDs in the index can be costly. In one example, to avoid these costs and manage building indexes in parallel, new document IDs added to a list can be entered at the end of the token's list. The last element *n* (i.e., newest) of the vector is compared against the previous element *n-1,* and if the ordering is correct (e.g., the document ID of element *n* is greater than the document ID of element *n-1*)*,* then the lock for the list is released and the list is prepared for the entry of the next document ID. If the document ID of element *n* is less than the document ID of element *n-1* elements *n-1* and *n* swap positions in the list and document ID *n* is compared against document ID *n-2,* and so on, until the proper position of document ID *n* is determined.

Cores of the multi-core processor can use a finished index(es) to determine 380, for each electronic document in the plurality of electronic documents, whether one or more queries in the plurality of queries match the respective electronic document. During query-document matching each core or processor can be assigned a range of queries in the corpus to match against the batch of documents recorded in the index(es). As noted above, in some instances, matching does not involve modifying the generated batch index, and there are no conflicts between the cores. When all cores are finished matching their assigned queries, there will be one list of matches for each core. In a multi-core implementation, these lists of matches can be accessible from all cores due to shared memory and merged to develop a set of results from the prospective search on the batch of documents.

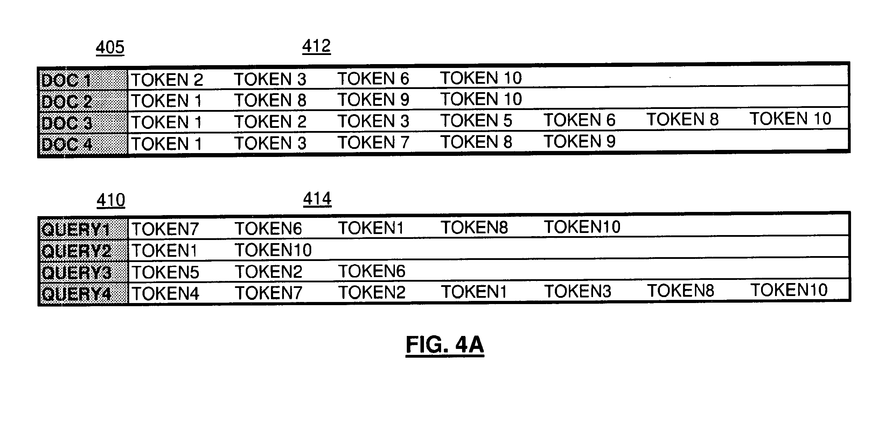

FIGS. 4A-4D illustrate example implementations of a prospective search on an example batch of documents. The examples illustrated in FIG. 4A-4D can be implemented by a prospective search system similar to that shown and described in connection with FIGS. 1A and 1B, performing acts described in FIGS. 3A-3D. In the example of FIG. 4A, a batch of electronic documents 405 is identified for which a prospective search is to be completed over a query corpus 410, e.g., using an algorithm described in FIGS. 3A-3D.

In this simplified example, the batch of documents 405 includes four electronic documents. Tokens 412 are associated with content of each of the four documents. Tokens 412 can be portions of the documents' content itself (e.g., a word or phrase identified in text, image, video, or audio data), metadata, user- or machine-generated tags, header data, file name, domain, or other data identified within, or otherwise associated with, the content of the electronic document. For instance, in this example, tokens can be words included in the content of a document. For example, in the example of FIG. 4A, Document 1 includes Tokens 2, 3, 6, and 10, while Document 4 includes Tokens 1, 3, 7, 8, and 9, and so on. In some instances and examples, a received document 405 may not include any identifiable, associated tokens. In other instances, e.g., in examples that treat each identified word within an electronic document as a token, a document can include thousands of tokens, including repeating tokens (i.e., a word that repeats itself throughout a particular document). In certain instances, stop words or other commonly-used words, such as "is," "the," "are," "to," etc., can be ignored or excluded as eligible tokens to be considered in the course of a prospective search to focus on more substantive tokens in either the document, a query, or both.

In the simplified examples of FIGS. 4A-4D, a query corpus 410 can include four pre-defined queries. The queries 410, in some examples, can correspond to a user subscription for notifications or documents, e.g., within the context of a pub/sub application. The queries include one or more query terms, or tokens 414. For instance, in the example of FIG. 4A, Query 1 is for documents that include Tokens 1, 6, 7, 8, and 10, and Query 2 is for documents that include Tokens 1 and 10. In some, more complex examples, the queries in the corpus 410 can include both query terms (i.e., "tokens") as well as search operators, e.g., Boolean operators (e.g., OR, AND), transactional, or navigational operators (e.g., specifying a source of documents, such as a source domain name or URL). As an example, the batch prospective search engine can support "OR", "AND," "NOT," and other Boolean operators by representing each query as a tree structure and proceeding with the query matching step using the query-token tree incorporating Boolean operators. In another example, operators associated with a token can be stored or identified as associated with its associated token in the index.

In some instances, exact phrase matching functionality can also be included. In one example, exact phrase matching can be realized by storing the positions of each instance of tokens in the documents within the batch index. In other instances, exact phrase matching functionality can be realized by using the batch prospective search as a filter to determine if document in the batch include each of the tokens in the query, and then further analyzing the positions of tokens within the matched documents to determine if the document includes the tokens as the specified phrase. In still another example, phrase matching can be implanted by representing the document as *n-*grams, i.e. to index several consecutive words. The hash of these words can be used. It will result in larger indexes and optimistic phrase matching for long phrase queries. In another instance, phrase query terms can be stored as phrase-tokens in a separate structure, such as a phrase index. A phrase index can be used during indexing of the document to check if phrases in the phrase index are present in the document. All phrases can be marked as matching if they are found in the document, for example, by using a search tree algorithm. In the matching step of the algorithm, a phrase index can be used to determine if the query being matched includes a phrase.

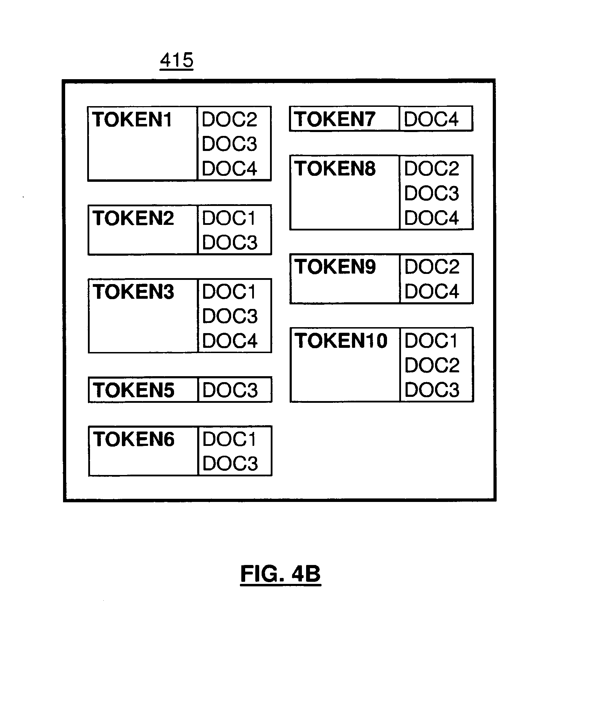

The batch of documents 405 can be processed to build a batch index 415, such as the example shown in FIG 4B. In this particular example, the index 415 can include records identifying tokens associated with documents in the batch 405. In this particular example, a token is a key for records in the index, the token keyed to the document ID of a particular document including the token. In some instances, tokens can be hashed to produce hash values for one or more of the token and/or document ID in the index 415. Hashing can assist in building batch indexes that can be more easily and efficiently searched, processed, and stored. In other examples of a batch index, index records can include additional, and more complex fields, such as fields identifying a score for a particular token-document combination. The index 415 can be built by scanning each electronic document in the batch to identify tokens associated with, or included in, the electronic document. In some instances, scanning documents and building indexes can include indexing substantially all of the text of the content of the electronic document. In certain instances, a bloom filter can be used to filter the generation of an index, or trim a generated index, so that the records of the index are limited to tokens that are actually included within queries of the corpus, or according to some other rule. For instance, the entire content of an electronic document can be tokenized and indexed and then run through a bloom filter that identifies all tokens included within any one of the queries of the corpus. The records for the particular document can then be pared down to include only records referencing the association of available query tokens with the content of the electronic document. As can be appreciated, building a batch index for the plurality of documents in the batch can, in some implementations, be very costly from a processor capacity standpoint. In some examples, a multi-core processor can thus be used to expedite and share the load of indexing tokens (and in some cases the very content) in each document in the batch 405. This can prove particularly useful in examples where the batch includes thousands of documents with potentially millions of tokens. In some instances, the index can be built for use with the prospective search engine and then subsequently used to populate a retrospective search index for documents in the batch 405. Additionally, the index 415 can be temporary-created and dedicated to a single prospective search. In other instances, the index can be cached or otherwise stored or archived.

In one example, a query graph can additionally be constructed for each query in the corpus that has been processed against a document batch. For instance, tokens of previously processed queries can be temporarily stored to indicate which or whether documents in the batch included tokens matching the query's tokens. For instance, match results for a token can be used so that a token included in more than one query in the corpus need only be matched against the tokens in the batch documents a single time. Processing of subsequent queries against the document batch, that also include the same query token, can begin by identifying whether the query token has already been processed. In some instances, prior to matching any of a query's tokens against tokens in the batch document, a query graph can be referenced to see if any of the query's tokens resulted in an empty set, or failed to match any document in the batch. Making this determination can result in a like determination that the subsequent query does not match any documents in the match, prior to having to further process the query against the batch. In some examples, cataloguing or caching query or token results can be limited to caching match results for those tokens determined to be common or popular in many queries or documents, in order to conserve computing resources.

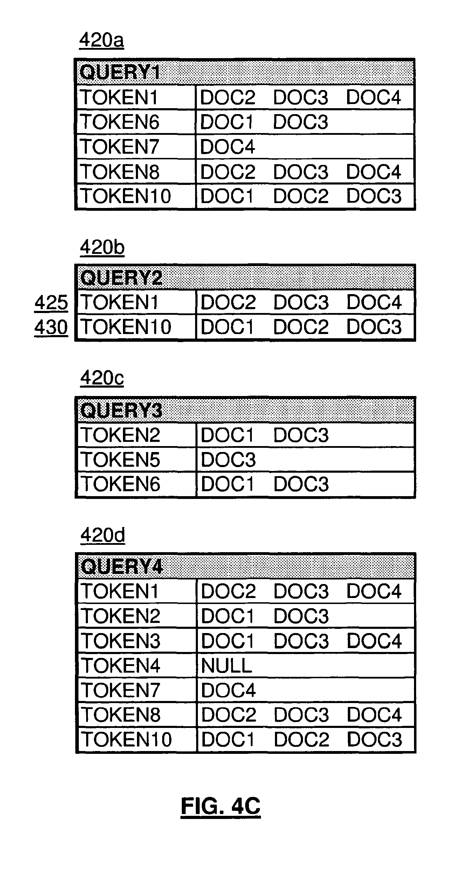

The index 415 can be used to match queries 410 to the batch documents 405. In the example of FIG. 4C, tokens of each query in the corpus can be compared against the index 415. In some instances, comparing a particular query against the index can involve comparing the individual tokens of the query against the documents' tokens referenced in records of the index 415. For instance, the value of a single token can serve as a look-up value for a search of a hashmap-type index to quickly identify those documents associated with the single token. The resulting list of documents identified (e.g., a listing of document IDs) can be stored in a temporary "pointing list" for the token. Additional pointing lists can be generated for the remaining tokens in a given query. For instance, FIG. 4C shows sets of pointing lists 420a-d generated, or identified, for each of the four queries in response to a matching step, matching documents to tokens in each query. As an example, for Query 2 a first pointing list 425 was generated for Token 1, included in Query 2, identifying each and every document in the batch 405 that included the associated Token 1. The first pointing list 425 includes Documents 2, 3, and 4 that include Token 1 (*cf.* FIG 4A). Additionally, a second pointing list 430 was generated for the second token in Query 2, Token 10, identifying Documents 1, 2, and 3. To further enhance the efficiencies introduced by the prospective searching batches of electronic documents, a matching step can further include identifying overlapping tokens among the queries in the corpus 410. In some instances, intersecting lists pointing lists can be cached for tokens that are common across more than one query in the query corpus. For instance, as seen in the example of FIG 4C, in some implementations, the pointing list 425 can be reused for other queries' that also include Token 1, avoiding the need to reproduce pointing lists for a given token each time the token is encountered in a query in the corpus 410. Consequently, in some instances, pointing list 425 can be cached and reused during the prospective searching of a batch of electronic documents 405.

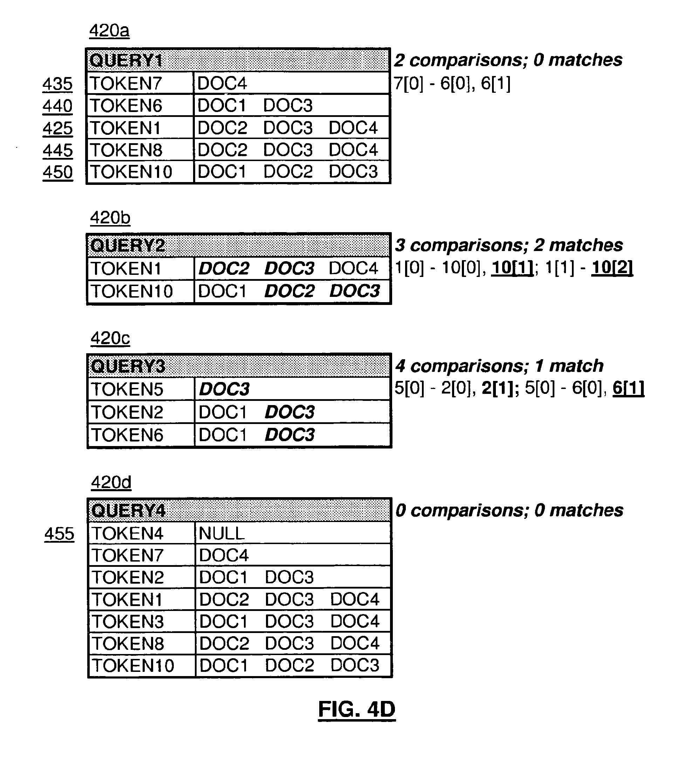

By matching individual tokens included in queries against a batch of documents, the documents that could be matches for the overall query can be pared-down. In the example of FIG 4D, pointing lists, such as those shown and described in FIG. 4C, can be used to efficiently identify all of the documents for which a particular query is a match. In FIG. 4D, the pointing list sets 420a-d of the four queries 410 have been reordered for processing. In this example, the pointing lists of each query have been ordered according to the number of documents in the pointing list. For instance, for Query 1, the pointing list 435 for Token 7 has been identified as having the fewest documents (i.e., one document, Document 4) in the set of pointing lists for tokens of Query 1. The pointing lists of Query 1 have been further ordered, with the pointing list 440 of Token 6 following Token 7's 435, and the pointing lists of Tokens 1 (425), 8 (445), and 10 (450) following thereafter. The pointing lists can then be intersected (i.e., compared against each other) to identify common documents identified in a query's pointing lists.

In some instances, to determine that a query matches a given document, it can be sufficient that the document is common to a certain percentage threshold of the query's tokens (e.g., where a document appears in over 80% of the query's tokens' pointing lists), while in other instances it can be required that the document appear in each of the query's tokens' pointing lists. For purposes of illustration, the match parameters employed in the example of FIG. 4D require that a document appear in each of a query's pointing lists. Based on these match rules, the pointing lists can be merged by comparing each element (document) of the list against the other elements. Ordering the list, in advance of this comparison, can assist in minimizing the number of comparisons needed to identify each and every document matching the query. Returning to the ordered pointing lists 435, 440, 445, 450 of Query 1, the first pointing list to be compared is to be the "first" pointing list, or the pointing list with the fewest referenced documents, in this case the pointing list 435 for Token 7. The first element of Token 7 ("7[0]" in shorthand) is compared with each element in the pointing list ordered second, pointing list 440 of Token 6. Comparing pointing lists 435 and 440 requires only two element-comparisons, the comparisons of elements 7[0] and 6[0], and elements 7[0] and 6[1]. The element comparison count for comparing pointing lists 435 and 440 is the fewest for comparing any other two pointing lists in the set of pointing lists for Query 1 because these two pointing lists 435, 440 have the fewest referenced documents. This is why, in this example, they are compared first. Indeed, as seen in FIG. 4D, in this example, it is determined, based on the comparisons of elements 7[0] and 6[0], and elements 7[0] and 6[1], that there are no common documents between pointing lists 435 and 440, because pointing list 440 does not include the single document, Document 4, referenced in pointing list 435. Consequently, using only two element comparisons, for this example, it can be concluded that there are no documents in the set of pointing lists (i.e., 425, 435, 440, 445, 450) for Query 1 that are common across each pointing list in the set. By ordering the comparison of pointing lists for the query, the number of comparison operations were minimized, conserving processing resources.

Continuing with the example of FIG. 4D, batch prospective searching using the document batch 405 can continue by proceeding to match the batch against Query 2. Query 2 includes two tokens, Tokens 1 and 10. The pointing lists for Tokens 1 and 10 each reference three documents, so an ordering step does not benefit list-merging for Query 2 In this example, elements 1 [0] and 10[0] are first compared (Document 2 vs. Document 1). This comparison allows the determination to be made that Document 1 does not match Query 2. Proceeding to the comparison of element 1 [0] and 10[1], a common document, Document 2, is identified. Since Document 2 is common to each token pointing list for Query 2, it is determined that Query 2 is a match for Document 2. In a third comparison, the comparison proceeds to element 1[1] because a match has already been determined based on element 1 [0]. Element 1[1] (corresponding to Document 3) is compared against element 10[2]. The comparison of element 1[1] and 10[2] yields a determination that a second match has been found between Document 3 and Query 2. Element 1[1] need not be compared against elements 10[0] and 10[1], in this example, because the values and match status of elements 10[0] (does not match) and 10[1] (match found) are already known. This is so because the document IDs in each pointing list are also ordered according to value in this example. Ordering document IDs within the pointing list can assist in further enhancing the efficiency of element comparisons. In some examples, the "length," or number of documents referenced in a pointing list, can be known (i.e., to determine pointing list order) as well as temporarily stored for use in processing pointing list merging. This can be useful, such as in the example of Query 2, to determine that there are no more opportunities to find common document among pointing lists for a query. In this example, comparisons based on 1[2] (Document 4) are forgone because the prospective search engine recognizes that there are no potential matching common document available in Token 10's pointing list 430, as the match status of all of the documents included in pointing list 430 have already been determined. In some instances, an additional, temporary data structure can be maintained to track comparisons between pointing list elements in a query's pointing list set, as well as cache the status of previous element comparisons within the pointing lists set, and data pertaining to the respective pointing lists in the pointing list set, such as pointing list length.

Continuing further with the example of FIG 4D, in some instances, a determination can be made that an entire batch of documents does not match a particular query without needing a single pointing list comparison. As illustrated above, ordering the comparison of pointing lists can help to minimize the number of comparisons that are needed to determine whether documents in the batch 405 match the query. In FIG 4, Query 4 includes a token pointing list 455, for Token 4, that is an empty array, or empty set. In other words, none of the documents in the batch 405 include Token 4. By ordering the pointing lists of Query 4 according to length, Token 4's null set is assigned to be compared first. However, because the match rules in this example require a document to be common across all pointing lists of a query to be a match, and one of the pointing lists is an empty set, it can be determined, without a single pointing list comparison, that no documents match Query 4 because one of the pointing lists of Query 4 is an empty set. In some instances, empty set pointing lists for a query can be identified in advance of ordering the pointing lists to allow a quick determination to be made for a query that it is not a match for any of the documents in a particular batch 405 of electronic documents.

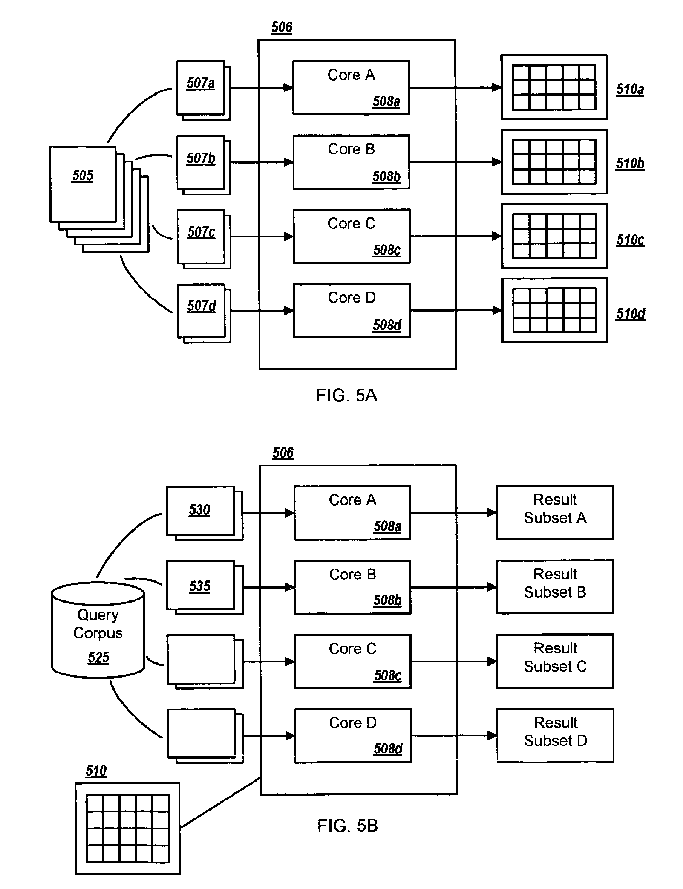

While the example of FIGS. 4A-4D is but a single, simplified and non-limiting example of one implementation of batch prospective searching, it is illustrative of some of the processing advantages that can be realized through batch prospective searching. Additionally, portions of the tasks that are performed as part of a batch prospective search, can be partitioned and performed in parallel by cores in a multi-core processor. For instance, FIGS. 5A and 5B illustrate an example implementation of a parallel prospective search on the example batch of documents of FIGS. 4A-4D. FIG. 5A shows an example of using a multi-core processor to build a batch index in parallel. In practice, a single electronic document can include thousands of potential tokens. Consequently, scanning a document, reading the tokens, and building a portion of the batch index for a single document can be processor intensive. To improve the performance of a batch prospective search engine, a multi-core processor 506 can be employed to partition the set of documents in a batch 505 and assign each partitioned subset 507a-d of documents to a particular core of the multi-core processor. Each core then builds a portion of a batch index for its assigned subset. In some instances, each core builds its own parallel batch index recording the tokens discovered in the documents in its subset. As shown in FIG. 5, in this example a quad-core (4 cores) processor is used, and each of the documents in the batch 505 is assigned to a particular core 508a-d. Each core then builds, in parallel, a batch index 510a-d for the documents assigned to it. The batch indexes 510a-d can then be concatenated or aggregated to form a single index for the batch 505 to be used to match queries to documents, or the partial indexes can be used.

Assignment of documents to a core can proceed under any suitable method or algorithm. For instance, documents can be assigned to cores in a round-robin fashion, randomly, based on the document ID or title, based on document size or density, processor core capacity, or using other techniques. In the example of FIG. 5A, each core 508a-d is initially assigned one of the documents in the batch 505. A core is next assigned a document once it finishes building a batch index record for its initial document. Consequently, cores are assigned document based on a first-come, first-served basis, allowing cores to balance the load of indexing document. For instance, a first core 508a may receive a first document that is fairly small in size and easy to scan and index, while a second core 508b receives a lengthier first document that requires more time to process and index. With the documents in the batch 505 pre-assigned to the cores 508a-d, there exists the potential that a particular core could be saddled with a disproportionate number of longer- or shorter-than-average documents, causing some cores to finish indexing long before others. Consequently, in some implementations, a form of load-balancing among the cores 508a-d can be implemented.

Once a batch index is built, queries can be matched against documents using the index. In some instances, a multi-core processor can be used to match queries to documents in parallel. FIG 5B illustrates an example for using a multi-core processor to perform parallel matching of documents and queries. In this example, a batch of documents 505 can be matched against queries 525 using a technique similar to those described in FIGS. 4C and 4D. Processing of the prospective search according to the techniques of FIGS. 4C and 4D can be enhanced by dividing tasks among multiple cores of a processor and performing the tasks in parallel. For example, as each query is processed substantially independently, using the techniques of FIGS. 4C and 4D, to determine whether the query is a match for any documents in the batch 505, determining query matches can be partitioned between cores in a multi-core processor on a query-by-query basis. For instance, as shown in FIG 5B, a first subset 530 of a query corpus 525 can be assigned to a first core 508a of a multi-core processor 506, a second subset 535 of the query corpus 525 to a second core 508b of the processor 506, and so on. Each of the cores 508a-b can then perform, in parallel, matching according to the techniques described in FIGS. 3A-3D, 4C-4D on each of their assigned queries.

As in the parallel building of batch indexes described in FIG 5A, cores 508a-d can be assigned query subsets 508a-d according to any suitable technique or algorithm. For instance, queries in the corpus 525 can be assigned to cores randomly, according to a processor core load-balancing algorithm, an arbitrary assignment protocol (e.g., the corpus of queries is divided into four subsets with equal numbers of queries), or other technique. Additionally, in some instances, documents in the batch can be partitioned to cores so as to maximize token overlap. Moreover, queries can also be partitioned to cores in connection with a parallel matching step in order to similarly maximize token overlap. As an example, documents and queries can be partitioned by language as documents (as well as queries) of a particular language are more likely to have overlapping tokens. In some instances, a multi-core processor can perform parallel operations in connection with one or more of the batch index building, query matching, or other tasks.

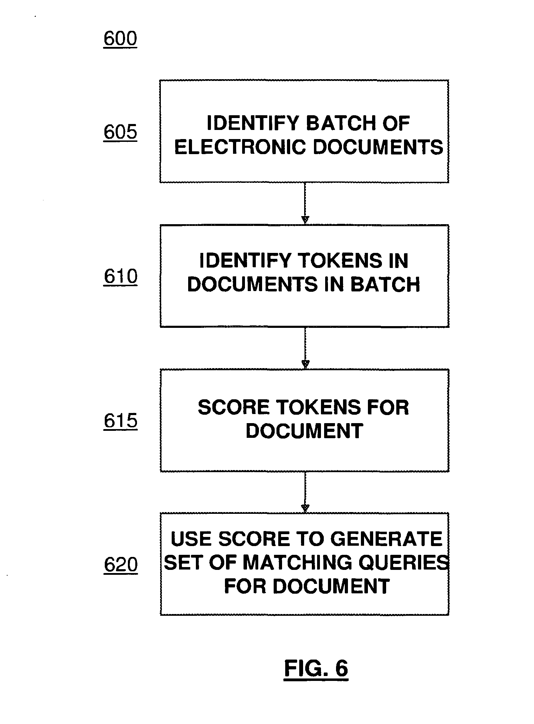

FIG. 6 is a flow diagram illustrating an example technique 600 for performing a prospective search utilizing scoring. Documents in a batch of documents can be identified 605 and scanned 610 to identify tokens associated with each document in the batch. Tokens identified for a document can then be scored 615. A token's score can, for example, indicate the particular relevance of the token to the document. Scores determined for a document's tokens can then be used 620 in connection with generating a set of queries in a query corpus determined to be matches for the document.

Scoring 615 can take place according to a variety of rules and scoring schemes. For example, in instances where scoring is designed to show the relevance of a token to a document, document tokens can be scored according to the number of appearances of a particular term or terms within the document, where the token appears within the document (e.g., scoring the token higher the earlier it appears in the document), whether the token appears in the header or title of the document, etc. Tokens can additionally be scored based on their usefulness as a token. For instance, tokens that appear less frequently within documents, including a document corpus, can be determined to be "useful" within a search context, because queries-document matches based on such "rare" tokens can be less likely to be false-positives, given the seldom use of the token. In one example, token scores can be used as pointing lists for a particular query are compared. As the listed documents identified in the pointing list are compared, the score of each token in a particular document is combined and the location of the token in the document is noted. If more than one of the query's tokens are located close to one another in the same document, the query is given an extra score for that document.

In addition to scoring tokens, documents in the batch of documents can also be scored. In some instances, documents can be scored on the basis that they include particular tokens identified as particular unique. In some instances, a document can be scored based on its popularity or trustworthiness. For example, a document can be scored based on the number of views or downloads of the document. In other examples, a document can be scored based on its "quality." For instance, a document can be scored based on the number of other documents, such as webpages on the internet, that link to the document. By scoring the document, those documents identified as being particularly valuable (e.g., having high scores) can be returned as matches to particular queries ahead of other documents identified as less valuable. Indeed, in some examples, a first document identified as a valuable document can be returned ahead of a document scored as less valuable but having token scores that indicate that it is a better match to the tokens in the query.

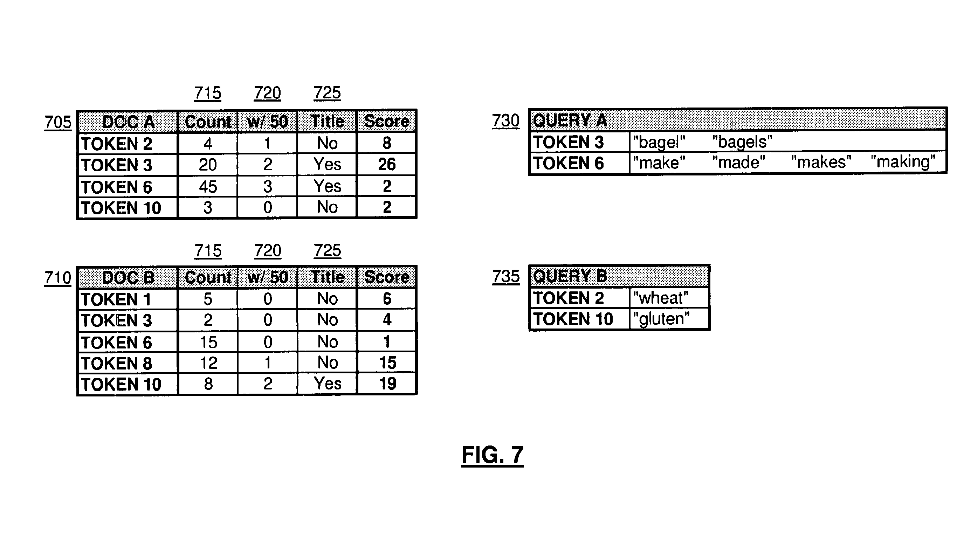

FIG. 7 illustrates an example implementation of a prospective search, including scoring tokens in a batch of documents. In the example of FIG. 7, the scores assigned to a documents' tokens can affect whether or how matching queries are returned for the documents. For instance, example representations of token scores are shown in tables 705 and 710, for Documents A and B respectively. Token scores, in this example, are determined based on the number of instances 715 of the token in the document, whether the token appears within the first 50 words 720 of the token, and whether the token appears within the title 725 of the token. Additionally, in some instances, the usefulness of rarity of a token can also be considered in scoring the token. For instance, in the example of FIG. 7, Token 6 corresponds to the word "make," as well as conjugated versions of the work "make." Accordingly, Token 6 is identified as being a commonly-used token and is scored lower than other tokens when appearing in a document. For instance, in Document A's scoring table 705, Token 6 is scored lower than Token 3 despite appearing more often in Document A. Additionally, Token 3 can be scored higher due to appearances within the first 50 words, as well as the title of Document A.

Token scores for Documents A and B tokens can affect whether or how matching queries are returned for the documents. For instance, although both Documents A and B include the tokens of Query A 730 (Tokens 3 and 6), the respective scores of Documents A and B may first be considered, as they pertain to Query A's tokens, before determining whether Query A is a match for Document A or B. For instance, a Document's token scores may be required to exceed a certain score threshold before the document is designated as matching the query. In one example, Query A can be determined to be a match for Document A, given the relatively high token scores of Document A for Tokens 3 and 6 (the Query A tokens), while Query A is determined not to be an adequate match for Document B, due to Document B's relatively low token scores for Tokens 3 and 6. In other examples, Query A can be determined to be a match for both Documents A and Document B.

In another example, a document can be determined to be a match to a query despite not including each of the tokens of the query. For instance, a document can be determined to be a match based on the document's high token score for an important token within the query. For instance, in FIG. 7, Document B only includes one (Token 10) of the two tokens of Query B 735. As illustrated in Document B's token score table 710, Document B has a high score for Token 10. On the basis of this high score, the absence of Token 2 (Query B's other token) within Document B can be overlooked, and Query B can be determined to be a match for Document B.

In yet another example, in some instances, once a set of matching queries have been determined for each of the particular documents in a document batch, in connection with a batch prospective search, the set of matching queries can be processed or trigger an event. For instance, a copy of a particular document can be transmitted to remote client computing devices associated with those queries that have been determined to match the document. In some instances, it may be desirable to limit the number of queries that are returned for a particular document or even limit the number of documents in the batch that have been identified as matching a particular query. For instance, in a pub/sub system, a particular subscription query may be broad in scope and include tokens that are included in large numbers of documents in batches processed by a prospective search engine. Rather than bombarding the query's subscriber with all documents identified for the query through prospective searching of newly identified batches of documents, token scoring, such as described in connection with FIGS. 6 and 7, can be used to limit the number of document returned to the subscriber to, for example, the top 10 documents based on those documents' scores of the particular query's tokens. The reverse can also be realized through scoring, where the number of queries matched to a particular document are also limited to a certain threshold amount based on the document's token scores.

Batch perspective searching can make prospective searching more efficient, particularly in applications that prospectively search large collections of electronic documents, e.g., websites, social networking pages, and other electronic documents on the internet. Some applications include "track-like" capabilities within microblogging services, message-routing applications, as well as mobile and enterprise software applications.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM, DVD-ROM, and Blu-ray^{™} disks. The processor and the memory can be supplemented by, or incorporated in, special purpose logic circuitry.

To provide for interaction with a user, examples of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Examples of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some Examples, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular examples of particular inventions. Certain features that are described in this specification in the context of separate examples can also be implemented in combination in a single example. Conversely, various features that are described in the context of a single example can also be implemented in multiple examples separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the examples described above should not be understood as requiring such separation in all examples, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

As alternative or in combination with the above, innovative aspects include:
Example 1 is directed to a computer-implemented method comprising:
   identifying a plurality of electronic documents for a prospective search against a plurality of predefined queries;
   generating an index for the plurality of electronic documents, wherein generating an index includes identifying a plurality of tokens associated with content of electronic documents in the plurality of electronic documents, the index including one or more index records each corresponding to a token in the plurality of tokens and identifying one or more electronic documents, in the plurality of electronic documents, having content associated with the token; and
   using the index to determine, for each electronic document in the plurality of electronic documents, whether one or more queries in the plurality of queries match the electronic document.
Example 2 is directed to the method of example 1, wherein determining matching queries in the plurality of queries includes:
   identifying, for each query in the plurality of queries, one or more tokens included in the query;
   determining for each identified token specific electronic documents in the plurality of electronic documents that include content associated with the identified token; and
   determining that a particular electronic document is a match for a particular query in the plurality of queries by determining, based on the index, that the particular electronic document includes an associated set of tokens that correspond to parameters associated with the particular query.
Example 3 is directed to the method of example 1 or 2, further comprising identifying, for each query in the plurality of queries, which electronic documents of the plurality of electronic documents match the query.
Example 4 is directed to the method of example 1, wherein determining matching queries in the plurality of queries includes:
   identifying one or more tokens in a particular query in the plurality of queries;
   using the index to identify a set of token pointing lists for the particular query, wherein each token pointing list corresponds to a respective identified token in the particular query and identifies electronic documents having content associated with the respective identified token;
   comparing token pointing lists in the set of token pointing lists for the particular query to determine whether one or more electronic documents identified in the set of token pointing lists is common across token pointing lists in the set of token pointing lists; and
   determining that the particular query matches electronic documents identified as common across token pointing lists in the set of token pointing lists.
Example 5 is directed to the method of example 4, wherein comparing token pointing lists includes:
   determining that a first pointing list in the set of token pointing lists, corresponding to a first token, has fewer associated matched electronic documents than other token pointing lists in the set of token pointing lists; and
   determining, for each electronic document identified in the first pointing list, whether other token pointing lists in the set of token pointing lists also includes the electronic documents identified in the first pointing list.
Example 6 is directed to the method of example 5, wherein comparing token pointing lists includes determining that at least one electronic document identified in the first pointing list does not match the particular query by identifying at least one other token pointing list in the set of token pointing lists that does not identify the electronic documents identified in the first pointing list.
Example 7 is directed to the method of any of examples 1 to 6, wherein at least a first and second core of a multi-core processor each perform, in parallel, at least a portion of generating an index for the plurality of electronic documents and using the index to determine whether one or more queries in the plurality of queries match each electronic document.
Example 8 is directed to the method of example 7, wherein generating an index includes generating at least two, non-overlapping indexes including a first index and a second index, wherein the first core generates the first index and the second core generates the second index.
Example 9 is directed to the method of example 7 or 8, wherein using the index to determine whether one or more queries in the plurality of queries match electronic document in the plurality of documents includes:
   assigning identification of matches for a first subset of the plurality of queries to the first core and assigning identification of matches for a second subset of the plurality of queries to the second core,
   wherein the first and second subset are non-overlapping portions of the plurality of queries, the first core uses the index to determine whether queries in the first subset of the plurality of queries match electronic document in the plurality of documents, and the second core uses the index to determine whether queries in the second subset of the plurality of queries match electronic document in the plurality of documents.
Example 10 is directed to the method of example 9, wherein determining whether one or more queries in the plurality of queries match electronic document in the plurality of documents includes:
   identifying, for each query in the plurality of queries, one or more tokens included in the query, and identifying for each identified token in the query, electronic documents that include content associated with the identified token;
   determining that a particular electronic document is a match for a particular query in the plurality of queries by determining, based on the index, that the particular electronic document includes an associated set of tokens that correspond to parameters associated with the particular query.
Example 11 is directed to the method of any of examples 1 to 10, wherein tokens associated with content of a particular electronic document are tokens included in the content of the electronic document.
Example 12 is directed to the method of any of examples 1 to 11, further comprising identifying that a first query in the plurality of queries is determined to match a first electronic document in the plurality of electronic documents;
   sending a message, to a remote computing device, identifying that the first electronic document matches the first query.
Example 13 is directed to the method of example 12, wherein the first query is associated with a first user subscription for electronic documents relating to the first query.
Example 14 is directed to the method of any of examples 1 to 13, further comprising scoring, for each electronic document in the plurality of electronic documents, at least one of the one or more tokens associated with the corresponding electronic document.
Example 15 is directed to an article comprising a machine-readable storage medium storing instructions for causing computer processing apparatus to perform operations comprising:
   identifying a plurality of electronic documents for a prospective search against a plurality of predefined queries;
   generating an index for the plurality of electronic documents, wherein generating an index includes identifying a plurality of tokens associated with content of electronic documents in the plurality of electronic documents, the index including one or more index records each corresponding to a token in the plurality of tokens and identifying one or more electronic documents, in the plurality of electronic documents, having content associated with the token;
   using the index to determine, for each electronic document in the plurality of electronic documents, whether one or more queries in the plurality of queries match the electronic document.
Example 16 is directed to the article of example 15, wherein the computer processing apparatus includes at least a first and second core, the first and second core each performing, in parallel, at least a portion of i) the building of an index for the plurality of electronic documents, and ii) the use of the index to determine whether one or more queries in the plurality of queries match the respective electronic document.
Example 17 is directed to the article of example 16, wherein building an index includes building at least two, non-overlapping indexes including a first index and a second index, wherein the first core builds the first index and the second core builds the second index.
Example 18 is directed to the article of example 16 or 17, wherein using the index to determine whether one or more queries in the plurality of queries match electronic document in the plurality of documents includes:
   assigning matching of a first subset of the plurality of queries to the first core and assigning matching of a second subset of the plurality of queries to the second core,
   wherein the first and second subset are non-overlapping portions of the plurality of queries, the first core uses the index to determine whether queries in the first subset of the plurality of queries match electronic document in the plurality of documents, and the second core uses the index to determine whether queries in the second subset of the plurality of queries match electronic document in the plurality of documents.
Example 19 is directed to the article of any of examples 15 to 18, operable to perform further operations comprising identifying, for each query in the plurality of queries, which electronic documents of the plurality of electronic documents match the query.
Example 20 is directed to the article of any of examples 15 to 19, wherein determining matching queries in the plurality of queries includes:
   identifying, for each query in the plurality of queries, one or more tokens included in the query;
   determining for each identified token specific electronic documents in the plurality of electronic documents that include content associated with the identified token; and
   determining that a particular electronic document is a match for a particular query in the plurality of queries by determining, based on the index, that the particular electronic document includes an associated set of tokens that correspond to parameters associated with the particular query.
Example 21 is directed to the article of any of examples 15 to 20, further storing instructions for causing the computer processing apparatus to perform operations according to the method of any of embodiments 1 to 14.
Example 22 is directed to a system comprising:
   at least one server hosting an index of a plurality of queries directed to one or more electronic resources;
   a prospective search engine, hosted by at least one server including a processor, the prospective search engine including:
      a document indexing tool adapted to identify a batch of electronic documents, including a plurality of electronic documents, and build an index for the batch, the index including, for each one of the plurality of electronic documents, one or more index records identifying at least one token associated with content of the corresponding electronic document;
      a prospective batch matching tool adapted to identify, for each query in the plurality of queries, one or more tokens included in the query, determine for each identified token specific electronic documents in the plurality of electronic documents that include content associated with the identified token, and determine that a particular electronic document is a match for a particular query in the plurality of queries by determining, based on the index, that the particular electronic document includes an associated set of tokens that correspond to parameters associated with the particular query.
Example 23 is directed to the system of example 22, wherein the prospective search engine is executed using a multi-core processor including at least a first core and a second core, operating in parallel.
Example 24 is directed to the system of example 23, the first core and second core each adapted to build, in parallel, at least a portion of the batch index, the first core building a first portion of the batch index and the second core building a second portion of the batch index, where the first and second portions of the batch index do not overlap.
Example 25 is directed to the system of example 23, the first core and second core each adapted to determine, in parallel, that electronic documents in the plurality of electronic documents match queries in the plurality of queries, the first core determining whether the electronic documents match a first portion of the plurality of queries and the second core determining whether the electronic documents match a second portion of the plurality of queries, where the first and second portions of the plurality of queries do not overlap.
Example 26 is directed to the system of any of examples 22 to 25, further adapted to perform any of the methods of embodiments 1 to 14.

## Claims

1. A computer-implemented method comprising:
identifying a plurality of electronic documents (205) for a prospective search against a plurality of predefined stored queries, wherein as the documents are identified, they are batched together to be prospectively-scarchcd together as a batch that includes the plurality of electronic documents;
generating an index (225) for the plurality of electronic documents (205), wherein generating an index includes identifying a plurality of tokens associated with content of electronic documents (205) in the plurality of electronic documents (205 the index including one or more index records each corresponding to a token in the plurality of tokens and identifying one or more electronic documents (205), in the plurality of electronic documents, having content associated with the token; and
using the index to determine, for each electronic document (205) in the plurality of electronic documents (205), whether one or more queries in the plurality of predefined stored queries match the electronic document (205), wherein determining matching queries in the plurality of predefined stored queries includes:
identifying one or more tokens in a particular query in the plurality of predefined stored queries;
using the index to identify a set of token pointing lists (425, 430) for the particular query, wherein each token pointing list corresponds to a respective identified token in the particular query and identifies electronic documents having content associated with the respective identified token;
comparing token pointing lists in the set of token pointing lists fur the particular query to determine whether one or more electronic documents identified in the set of token pointing lists is common across token pointing lists in the set of token pointing lists; and
determining that the particular query matches electronic documents identified as common across token pointing lists in the set of token pointing lists.

2. The method of claim 1, wherein determining matching queries in the plurality of predefined stored queries includes:
identifying, for each query in the plurality of queries, one or more tokens included in the query;
determining for each identified token specific electronic documents (205) in the plurality of electronic documents that include content associated with the identified token; and
determining that a particular electronic document is a match for a particular query in the plurality of queries by determining, based on the index, that the particular electronic document (205) includes an associated set of tokens that correspond to parameters associated with the particular query.

3. The method of claim 1 or 2, further comprising identifying, for each query in the plurality of queries, which electronic documents of the plurality of electronic documents match the query.

4. The method of claim 1, further comprising continuously receiving new electronic documents for prospective searching and holding them in a queue while the indexing and matching steps are running for the previously received batch of documents.

5. The method of claim 1, wherein comparing token pointing lists includes:
determining that a first pointing list in the set of token pointing lists, corresponding to a first token, has fewer associated matched electronic documents than other token pointing lists in the set of token pointing lists; and
determining, for each electronic document identified in the first pointing list, whether other token pointing lists in the set of tokcn pointing lists also includes the electronic documents identified in the first pointing list;
wherein comparing token pointing lists includes determining that at least one electronic document identified in the first pointing list does not match the particular query by identifying at least one other token pointing list in the set of token pointing lists that does not identify the electronic documents identified in the first pointing list.

6. The method of any of claims 1 to 5, wherein at least a first and second core of a multi-core processor each perform, in parallel, at least a portion of generating an index for the plurality of electronic documents and using the index to determine whether one or more queries in the plurality of queries match each electronic document.

7. The method of claim 6, wherein generating an index includes generating at least two, non-overlapping indexes including a first index and a second index, wherein the first core generates the first index and the second core generates the second index.

8. The method of claim 6 or 7, wherein using the index to determine whether one or more queries in the plurality of queries match electronic document in the plurality of documents includes:
assigning identification of matches for a first subset of the plurality of queries to the first core and assigning identification of matches for a second subset of the plurality of queries to the second core,
wherein the first and second subset are non-overlapping portions of the plurality of queries, the first core uses the index to determine whether queries in the first subset of the plurality of queries match electronic document in the plurality of documents, and the second core uses the index to determine whether queries in the second subset of the plurality of queries match electronic document in the plurality of documents;
wherein determining whether one or more queries in the plurality of queries match electronic document in the plurality of documents includes:
identifying, for each query in the plurality of queries, one or more tokens included in the query, and identifying for each identified token in the query, electronic documents that include content associated with the identified token;
determining that a particular electronic document is a match for a particular query in the plurality of queries by determining, based on the index, that the particular electronic document includes an associated set of tokens that correspond to parameters associated with the particular query.

9. The Method of any of claims I to 8, wherein tokens associated with content of a particular electronic document arc tokens included in the content of the electronic document.

10. The method of any of claims 1 to 9, further comprising identifying that a first query in the plurality of queries is determined to match a first electronic document in the plurality of electronic documents; sending a message, to a remote computing device, identifying that the first electronic document matches the first query; wherein the first query is associated with a first user subscription for electronic documents relating to the first query.

11. An article comprising a machine-readable storage medium storing instructions for causing computer processing apparatus to perform operations comprising:
identifying a plurality of electronic documents (205) for a prospective search against a plurality of predefined stored queries wherein as the documents are identified, they are batched together to be prospectively-searched together as a batch that includes the plurality of electronic documents;
generating an index (225) for the plurality of electronic documents (205), wherein generating an index includes identifying a plurality of tokens associated with content of electronic documents (205) in the plurality of electronic documents (205); the index including one or more index records each corresponding to a token in the plurality of tokens and identifying one or more electronic documents (205), in the plurality of electronic documents (205), having content associated with the token;
using the index to determine, for each electronic document (205) in the plurality of electronic documents (205), whether one or more queries in the plurality of predefined stored queries match the electronic document (205), wherein determining matching queries in the plurality of predefined stored queries includes:
identifying one or more tokens in a particular query in the plurality of predefined stored queries;
using the index to identify a set of token pointing lists (425, 430) for the particular query, wherein each token pointing list corresponds to a respective identified token in the particular query and identifies electronic documents having content associated with the respective identified token;
comparing token pointing lists in the set of token pointing lists for the particular query to determine whether one or more electronic documents identified in the set of token pointing lists is common across token pointing lists in the set of token pointing lists; and
determining that the particular query matches electronic documents identified as common across token pointing lists in the set of token pointing lists.

12. The article of claim 11, operable to perform further operations comprising identifying, for each query in the plurality of queries, which electronic documents of the plurality of electronic documents match the query.

13. The article of claim 11 or 12, wherein determining matching queries in the plurality of predefined stored queries includes:
identifying, for each query in the plurality of queries, one or more tokens included in the query;
determining for each identified token specific electronic documents in the plurality of electronic documents that include content associated with the identified token; and
determining that a particular electronic document is a match for a particular query in the plurality of queries by determining, based on the index, that the particular electronic document includes an associated set of tokens that correspond to parameters associated with the particular query.

14. The article of any of claims 11 to 13, further storing instructions for causing the computer processing apparatus to perform operations according to the method of any of embodiments 1 to 10.

15. A system comprising:
at least one server hosting an index of a plurality of queries directed to one or more electronic resources;
a prospective search engine, hosted by at least one server including a processor, the prospective search engine including:
a document indexing tool (210) adapted to identify a batch of electronic documents (205), including a plurality of electronic documents (205), and build an index (225) for the batch the index including, for each one of the plurality of electronic documents (205, one or more index records identifying at least one token associated with content of the corresponding electronic document;
a prospective batch matching tool adapted to identify, for each query in the plurality of queries, one or more tokens included in the query, determine for each identified token specific electronic documents (205) in the plurality of electronic documents (205) that include content associated with the identified token, and determine that a particular electronic document is a match for a particular query in the plurality of queries by determining, based on the index, that the particular electronic document (205) includes an associated set of tokens that correspond to parameters associated with the particular query, wherein determining a matching query in the plurality of queries includes:
using the index to identify a set of token pointing lists (425, 430) for the particular query, wherein each token pointing list corresponds to the respective identified token in the particular query and identifies the electronic documents including content associated with the respective identified token;
comparing token pointing lists in the set of token pointing lists for the particular query to determine whether one or more electronic documents identified in the set of token pointing lists is common across token pointing lists in the set of token pointing lists; and
determining that the particular query matches electronic documents identified as common across tokcn pointing lists in the set of tokcn pointing lists, optionally wherein the system is further adapted to perform any of the methods of embodiments 1 to 10.

## Patentansprüche

1. Computerimplementiertes Verfahren, das Folgendes umfasst:
Identifizieren mehrerer elektronischer Dokumente (205) für eine potentielle Suche gegenüber mehreren vordefinierten gespeicherten Abfragen, wobei die Dokumente, während sie identifiziert werden, zusammen in einem Bündel angeordnet werden, um als ein Bündel, der die mehreren elektronischen Dokumente enthält, potentiell zusammen durchsucht zu werden;
Erzeugen eines Index (225) für die mehreren elektronischen Dokumente (205), wobei das Erzeugen eines Index das Identifizieren mehrerer Token enthält, die einem Inhalt elektronischer Dokumente (205) in den mehreren elektronischen Dokumenten (205) zugeordnet sind; wobei der Index einen oder mehrere Indexdatensätze enthält, die jeweils einem Token in den mehreren Token entsprechen und eines oder mehrere elektronische Dokumente (205) in den mehreren elektronischen Dokumenten identifizieren, die einen Inhalt besitzen, der dem Token zugeordnet ist; und
Verwenden des Index, um für jedes elektronische Dokument (205) in den mehreren elektronischen Dokumenten (205) zu bestimmen, ob eine oder mehrere Abfragen in den mehreren vordefinierten gespeicherten Abfragen zu dem elektronischen Dokument (205) passen, wobei das Bestimmen passender Abfragen in den mehreren vordefinierten gespeicherten Abfragen Folgendes enthält:
Identifizieren eines oder mehrerer Token in einer bestimmten Abfrage in den mehreren vordefinierten gespeicherten Abfragen;
Verwenden des Index zum Identifizieren einer Menge von Tokenzeigelisten (425, 430) für die bestimmte Abfrage, wobei jede Tokenzeigeliste einem jeweiligen identifizierten Token in der bestimmten Abfrage entspricht und elektronische Dokumente identifiziert, die einen Inhalt besitzen, der dem jeweiligen identifizierten Token zugeordnet ist;
Vergleichen der Tokenzeigelisten in der Menge von Tokenzeigelisten für die bestimmte Abfrage, um zu bestimmen, ob eines oder mehrere elektronische Dokumente, die in der Menge von Tokenzeigelisten identifiziert sind, über Tokenzeigelisten in der Menge von Tokenzeigelisten gemeinsam sind; und
Bestimmen, dass die bestimmte Abfrage zu elektronischen Dokumenten passt, die über Tokenzeigelisten in der Menge von Tokenzeigelisten als gemeinsam identifiziert sind.

2. Verfahren nach Anspruch 1, wobei das Bestimmen passender Abfragen in den mehreren vordefinierten gespeicherten Abfragen Folgendes enthält:
Identifizieren eines oder mehrerer in der Abfrage enthaltener Token für jede Abfrage in den mehreren Abfragen;
Bestimmen spezifischer elektronischer Dokumente (205) in den mehreren elektronischen Dokumenten, die einen Inhalt enthalten, der dem identifizierten Token zugeordnet ist, für jedes identifizierte Token; und
Bestimmen, dass ein bestimmtes elektronisches Dokument für eine bestimmte Abfrage in den mehreren Abfragen ein Passendes ist, durch Bestimmen, dass das bestimmte elektronische Dokument (205) eine zugeordnete Menge von Token enthält, die Parametern entsprechen, die der bestimmten Abfrage zugeordnet sind, auf der Grundlage des Index.

3. Verfahren nach Anspruch 1 oder 2, das ferner das Identifizieren, welche elektronischen Dokumente der mehreren elektronischen Dokumente zu der Abfrage passen, für jede Abfrage in den mehreren Abfragen umfasst.

4. Verfahren nach Anspruch 1, das ferner das ununterbrochene Empfangen neuer elektronischer Dokumente zum potentiellen Durchsuchen und ihr Halten in einer Warteschlange, während die Indizierungs- und Anpassungsschritte für die zuvor empfangenen Bündel von Dokumenten ablaufen, umfasst.

5. Verfahren nach Anspruch 1, wobei das Vergleichen von Tokenzeigelisten Folgendes enthält:
Bestimmen, dass eine erste Zeigeliste in der Menge von Tokenzeigelisten, die einem ersten Token entspricht, in der Menge von Tokenzeigelisten weniger zugeordnete passende elektronische Dokumente als andere Tokenzeigelisten besitzt; und
Bestimmen, ob andere Tokenzeigelisten in der Menge von Tokenzeigelisten ebenfalls die in der ersten Zeigeliste identifizierten elektronischen Dokumente enthalten, für jedes in der ersten Zeigeliste identifizierte elektronische Dokument;
wobei das Vergleichen von Tokenzeigelisten das Bestimmen, dass wenigstens ein in der ersten Zeigeliste identifiziertes elektronisches Dokument nicht zu der bestimmten Abfrage passt, durch Identifizieren wenigstens einer anderen Tokenzeigeliste in der Menge von Tokenzeigelisten, die nicht die in der ersten Zeigeliste identifizierten elektronischen Dokumente identifiziert, enthält.

6. Verfahren nach einem der Ansprüche 1 bis 5, wobei wenigstens ein erster und ein zweiter Kern eines Mehrkernprozessors jeweils wenigstens einen Teil des Erzeugens eines Index für die mehreren elektronischen Dokumente und des Verwendens des Index, um zu bestimmen, ob eine oder mehrere Abfragen in den mehreren Abfragen zu jedem elektronischen Dokument passen, parallel ausführen.

7. Verfahren nach Anspruch 6, wobei das Erzeugen eines Index das Erzeugen wenigstens zweier nicht überschneidender Indizes, die einen ersten Index und einen zweiten Index enthalten, enthält, wobei der erste Kern den ersten Index erzeugt und der zweite Kern den zweiten Index erzeugt.

8. Verfahren nach Anspruch 6 oder 7, wobei das Verwenden des Index, um zu bestimmen, ob eine oder mehrere Abfragen in den mehreren Abfragen zu einem elektronischen Dokument in den mehreren Dokumenten passen, Folgendes enthält:
Zuweisen einer Identifizierung von Passenden für eine erste Teilmenge der mehreren Abfragen zu dem ersten Kern und Zuweisen einer Identifizierung von Passenden für eine zweite Teilmenge der mehreren Abfragen zu dem zweiten Kern, wobei die erste und die zweite Teilmenge nicht überschneidende Teile der mehreren Abfragen sind, wobei der erste Kern den Index dazu verwendet zu bestimmen, ob Abfragen in der ersten Teilmenge der mehreren Abfragen zu einem elektronischen Dokument in den mehreren Dokumenten passen, und der zweite Kern den Index dazu verwendet zu bestimmen, ob Abfragen in der zweiten Teilmenge der mehreren Abfragen zu einem elektronischen Dokument in den mehreren Dokumenten passen; wobei das Bestimmen, ob eine oder mehrere Abfragen in den mehreren Abfragen zu einem elektronischen Dokument in den mehreren Dokumenten passen, Folgendes enthält:
Identifizieren eines oder mehrerer in der Abfrage enthaltener Token für jede Abfrage in den mehreren Abfragen und Identifizieren elektronischer Dokumente, die einen Inhalt enthalten, der dem identifizierten Token zugeordnet ist, für jedes identifizierte Token in der Abfrage;
Bestimmen, dass ein bestimmtes elektronisches Dokument für eine bestimmte Abfrage in den mehreren Abfragen ein Passendes ist, durch Bestimmen, dass das bestimmte elektronische Dokument eine zugeordnete Menge von Token enthält, die der bestimmten Abfrage zugeordneten Parametern entsprechen, auf der Grundlage des Index.

9. Verfahren nach einem der Ansprüche 1 bis 8, wobei Token, die dem Inhalt eines bestimmten elektronischen Dokuments zugeordnet sind, Token sind, die in dem Inhalt des elektronischen Dokuments enthalten sind.

10. Verfahren nach einem der Ansprüche 1 bis 9, das ferner das Identifizieren, dass bestimmt wird, dass eine erste Abfrage in den mehreren Abfragen zu einem ersten elektronischen Dokument in den mehreren elektronischen Dokumenten passt; das Senden einer Nachricht, die identifiziert, dass das erste elektronische Dokument zu der ersten Abfrage passt, an eine ferne Computervorrichtung; wobei die erste Abfrage einem ersten Nutzerabonnement für elektronische Dokumente in Bezug auf die erste Abfrage zugeordnet ist, umfasst.

11. Artikel, der ein maschinenlesbares Speichermedium umfasst, das Anweisungen speichert, um zu veranlassen, dass eine Computerverarbeitungsvorrichtung Operationen ausführt, die Folgende umfassen:
Identifizieren mehrerer elektronischer Dokumente (205) für eine potentielle Suche gegenüber mehreren vordefinierten gespeicherten Abfragen, wobei die Dokumente, während sie identifiziert werden, zusammen in einem Bündel angeordnet werden, um als ein Bündel, der die mehreren elektronischen Dokumente enthält, potentiell zusammen durchsucht zu werden;
Erzeugen eines Index (225) für die mehreren elektronischen Dokumente (205), wobei das Erzeugen eines Index das Identifizieren mehrerer Token enthält, die einem Inhalt elektronischer Dokumente (205) in den mehreren elektronischen Dokumenten (205) zugeordnet sind; wobei der Index einen oder mehrere Indexdatensätze enthält, die jeweils einem Token in den mehreren Token entsprechen und eines oder mehrere elektronische Dokumente (205) in den mehreren elektronischen Dokumenten (205) identifizieren, die einen Inhalt besitzen, der dem Token zugeordnet ist;
Verwenden des Index, um für jedes elektronische Dokument (205) in den mehreren elektronischen Dokumenten (205) zu bestimmen, ob eine oder mehrere Abfragen in den mehreren vordefinierten gespeicherten Abfragen zu dem elektronischen Dokument (205) passen, wobei das Bestimmen passender Abfragen in den mehreren vordefinierten gespeicherten Abfragen Folgendes enthält:
Identifizieren eines oder mehrerer Token in einer bestimmten Abfrage in den mehreren vordefinierten gespeicherten Abfragen;
Verwenden des Index zum Identifizieren einer Menge von Tokenzeigelisten (425, 430) für die bestimmte Abfrage, wobei jede Tokenzeigeliste einem jeweiligen identifizierten Token in der bestimmten Abfrage entspricht und elektronische Dokumente identifiziert, die einen Inhalt besitzen, der dem jeweiligen identifizierten Token zugeordnet ist;
Vergleichen der Tokenzeigelisten in der Menge von Tokenzeigelisten für die bestimmte Abfrage, um zu bestimmen, ob eines oder mehrere elektronische Dokumente, die in der Menge von Tokenzeigelisten identifiziert sind, über Tokenzeigelisten in der Menge von Tokenzeigelisten gemeinsam sind; und
Bestimmen, dass die bestimmte Abfrage zu elektronischen Dokumenten passt, die über Tokenzeigelisten in der Menge von Tokenzeigelisten als gemeinsam identifiziert sind.

12. Artikel nach Anspruch 11, der betreibbar ist, um ferner Operationen auszuführen, die das Identifizieren, welche elektronischen Dokumente der mehreren elektronischen Dokumente zu der Abfrage passen, für jede Abfrage in den mehreren Abfragen umfassen.

13. Artikel nach Anspruch 11 oder 12, wobei das Bestimmen passender Abfragen in den mehreren vordefinierten gespeicherten Abfragen Folgendes enthält:
Identifizieren eines oder mehrerer in der Abfrage enthaltener Token für jede Abfrage in den mehreren Abfragen;
Bestimmen spezifischer elektronischer Dokumente in den mehreren elektronischen Dokumenten, die einen Inhalt enthalten, der dem identifizierten Token zugeordnet ist, für jedes identifizierte Token; und
Bestimmen, dass ein bestimmtes elektronisches Dokument für eine bestimmte Abfrage in den mehreren Abfragen ein Passendes ist, durch Bestimmen, dass das bestimmte elektronische Dokument eine zugeordnete Menge von Token enthält, die Parametern entsprechen, die der bestimmten Abfrage zugeordnet sind, auf der Grundlage des Index.

14. Artikel nach einem der Ansprüche 11 bis 13, der ferner Anweisungen speichert, um zu veranlassen, dass die Computerverarbeitungsvorrichtung Operationen in Übereinstimmung mit dem Verfahren nach einem der Ausführungsformen 1 bis 10 ausführt.

15. System, das Folgendes umfasst:
wenigstens einen Server, der einen Index mehrerer Abfragen, die auf eines oder mehrere elektronische Betriebsmittel gerichtet sind, hostet;
eine Maschine für potentielle Suchen, die durch wenigstens einen Server gehostet wird, der einen Prozessor enthält, wobei die Maschine für potentielle Suchen Folgendes enthält:
ein Dokumentindizierungshilfsmittel (210), das zum Identifizieren eines Bündels elektronischer Dokumente (205), der mehrere elektronische Dokumente (205) enthält, und zum Aufbauen eines Index (225) für den Bündel des Index, der für jedes der mehreren elektronischen Dokumente (205) einen oder mehrere Indexdatensätze enthält, die wenigstens ein Token identifizieren, das einem Inhalt des entsprechenden elektronischen Dokuments zugeordnet ist, ausgelegt ist;
ein Hilfsmittel für die Anpassung des potentiellen Bündels, das dafür ausgelegt ist, für jede Abfrage in den mehreren Abfragen eines oder mehrere in der Abfrage enthaltene Token zu identifizieren, für jedes identifizierte Token spezifische elektronische Dokumente (205) in den mehreren elektronischen Dokumenten (205), die einen Inhalt enthalten, der dem identifizierten Token zugeordnet ist, zu bestimmen und zu bestimmen, dass ein bestimmtes elektronisches Dokument für eine bestimmte Abfrage in den mehreren Abfragen ein Passendes ist, indem auf der Grundlage des Index bestimmt wird, dass das bestimmte elektronische Dokument (205) eine zugeordnete Menge von Token enthält, die Parametern entsprechen, die der bestimmten Abfrage zugeordnet sind, wobei in den mehreren Abfragen eine passende Abfrage bestimmt wird, die Folgendes enthält:
Verwenden des Index, um für die bestimmte Abfrage eine Menge von Tokenzeigelisten (425, 430) zu identifizieren, wobei jede Tokenzeigeliste dem jeweiligen identifizierten Token in der bestimmten Abfrage entspricht und diejenigen elektronischen Dokumente identifiziert, die einen Inhalt enthalten, der dem jeweiligen identifizierten Token zugeordnet ist;
Vergleichen von Tokenzeigelisten in der Menge von Tokenzeigelisten für die bestimmte Abfrage, um zu bestimmen, ob eines oder mehrere in der Menge von Tokenzeigelisten identifizierte elektronische Dokumente über Tokenzeigelisten in der Menge von Tokenzeigelisten gemeinsam sind; und
Bestimmen, dass die bestimmte Abfrage zu elektronischen Dokumenten passt, die über Tokenzeigelisten in der Menge von Tokenzeigelisten als gemeinsam identifiziert sind, wobei das System optional ferner zum Ausführen eines der Verfahren der Ausführungsformen 1 bis 10 ausgelegt ist.

## Revendications

1. Procédé mis en oeuvre par ordinateur, le procédé comprenant les étapes consistant à :
identifier une pluralité de documents électroniques (205) pour une recherche prospective par rapport à une pluralité de demandes d'information mémorisées prédéfinies, lesquels documents sont, au fur et à mesure de leur identification, mis en lot pour faire l'objet d'une recherche prospective groupée sous forme d'un lot incluant la pluralité de documents électroniques ;
générer un index (225) pour la pluralité de documents électroniques (205), laquelle étape consistant à générer un index comprend les étapes consistant à identifier une pluralité de jetons associés au contenu de documents électroniques (205) dans la pluralité de documents électroniques (205), l'index incluant un ou plusieurs enregistrements d'index correspondant chacun à un jeton dans la pluralité de jetons, et à identifier un ou plusieurs documents électroniques (205), dans la pluralité de documents électroniques, possédant le contenu associé au jeton ; et
utiliser l'index pour établir, pour chaque document électronique (205) dans la pluralité de documents électroniques (205), si une ou plusieurs demandes d'information dans la pluralité de demandes d'information mémorisées prédéfinies concordent avec le document électronique (205), laquelle étape consistant à établir des demandes d'information concordantes dans la pluralité de demandes d'information mémorisées prédéfinies comprend les étapes consistant à :
identifier un ou plusieurs jetons dans une demande d'information particulière dans la pluralité de demandes d'information mémorisées prédéfinies ;
utiliser l'index pour identifier un ensemble de listes de pointage de jeton (425, 430) pour la demande d'information particulière, chacune desquelles listes de pointage de jeton correspond à un jeton identifié respectif dans la demande d'information particulière et identifie des documents électroniques possédant le contenu associé au jeton identifié respectif ;
comparer des listes de pointage de jeton dans l'ensemble de listes de pointage de jeton pour la demande d'information particulière pour établir si un ou plusieurs documents électroniques identifiés dans l'ensemble de listes de pointage de jeton sont communs parmi des listes de pointage de jeton dans l'ensemble de listes de pointage de jeton ; et
établir que la demande d'information particulière concorde avec des documents électroniques identifiés comme étant communs parmi des listes de pointage de jeton dans l'ensemble de listes de pointage de jeton.

2. Procédé selon la revendication 1, dans lequel l'étape consistant à établir des demandes d'information concordantes dans la pluralité de demandes d'information mémorisées prédéfinies comprend les étapes consistant à :
identifier, pour chaque demande d'information dans la pluralité de demandes d'information, un ou plusieurs jetons inclus dans la demande d'information ;
établir, pour chaque jeton identifié, des documents électroniques spécifiques (205) dans la pluralité de documents électroniques incluant le contenu associé au jeton identifié ; et
établir qu'un document électronique particulier est une concordance pour une demande d'information particulière dans la pluralité de demandes d'information en établissant, à partir de l'index, que le document électronique particulier (205) inclut un ensemble de jetons associé correspondant à des paramètres associés à la demande d'information particulière.

3. Procédé selon la revendication 1 ou 2, comprenant en outre l'étape consistant à identifier, pour chaque demande d'information dans la pluralité de demandes d'information, quels documents électroniques de la pluralité de documents électroniques concordent avec la demande d'information.

4. Procédé selon la revendication 1, comprenant en outre l'étape consistant à recevoir en continu de nouveaux documents électroniques pour une recherche prospective et à les stocker dans une file d'attente pendant l'exécution des étapes d'indexation et de concordance pour un lot de documents reçu précédemment.

5. Procédé selon la revendication 1, dans lequel l'étape consistant à comparer des listes de pointage de jeton comprend les étapes consistant à :
établir qu'une première liste de pointage dans l'ensemble de listes de pointage de jeton, correspondant à un premier jeton, comporte moins de documents électroniques concordants associés que d'autres listes de pointage de jeton dans l'ensemble de listes de pointage de jeton ; et
établir, pour chaque document électronique identifié dans la première liste de pointage, si d'autres listes de pointage de jeton dans l'ensemble de listes de pointage de jeton incluent également les documents électroniques identifiés dans la première liste de pointage ;
laquelle étape consistant à comparer des listes de pointage de jeton comprend l'étape consistant à établir qu'au moins un document électronique identifié dans la première liste de pointage ne concorde pas avec la demande d'information particulière en identifiant au moins une autre liste de pointage de jeton dans l'ensemble de listes de pointage de jeton qui n'identifie par les documents électroniques identifiés dans la première liste de pointage.

6. Procédé selon l'une quelconque des revendications 1 à 5, dans lequel au moins des premier et deuxième coeurs d'un processeur multicoeur exécutent chacun, en parallèle, au moins une partie de l'étape consistant à générer un index pour la pluralité de documents électroniques et de l'étape consistant à utiliser l'index pour établir si une ou plusieurs demandes d'information dans la pluralité de demandes d'information concordent avec chaque document électronique.

7. Procédé selon la revendication 6, dans lequel l'étape consistant à générer un index comprend l'étape consistant à générer au moins deux index disjoints comprenant un premier index et un deuxième index, lequel premier coeur génère le premier index et lequel deuxième coeur génère le deuxième index.

8. Procédé selon la revendication 6 ou 7, dans lequel l'étape consistant à utiliser l'index pour établir si une ou plusieurs demandes d'information dans la pluralité de demandes d'information concordent avec des documents électroniques dans la pluralité de documents électroniques comprend les étapes consistant à :
attribuer au premier coeur une identification de concordances pour un premier sous-ensemble de la pluralité de demandes d'information et attribuer au deuxième coeur une identification de concordances pour un deuxième sous-ensemble de la pluralité de demandes d'information, lesquels premier et deuxième sous-ensembles constituent des parties disjointes de la pluralité de demandes d'information, lequel premier coeur utilise l'index pour établir si des demandes d'information dans le premier sous-ensemble de la pluralité de demandes d'information concordent avec des documents électroniques dans la pluralité de documents, et lequel deuxième coeur utilise l'index pour établir si des demandes d'information dans le deuxième sous-ensemble de la pluralité de demandes d'information concordent avec des documents électroniques dans la pluralité de documents ; laquelle étape consistant à établir si une ou plusieurs demandes d'information dans la pluralité de demandes d'information concordent avec des documents électroniques dans la pluralité de documents comporte l'étape consistant à : identifier, pour chaque demande d'information dans la pluralité de demandes d'information, un ou plusieurs jetons inclus dans la demande d'information, et identifier, pour chaque jeton identifié dans la demande d'information, des documents électroniques incluant le contenu associé au jeton identifié ;
établir qu'un document électronique particulier est une concordance pour une demande d'information particulière dans la pluralité de demandes d'information en établissant, à partir de l'index, que le document électronique particulier inclut un ensemble de jetons associé correspondant à des paramètres associés à la demande d'information particulière.

9. Procédé selon l'une quelconque des revendications 1 à 8, dans lequel des jetons associés au contenu d'un document électronique particulier sont des jetons inclus dans le contenu du document électronique.

10. Procédé selon l'une quelconque des revendications 1 à 9, comprenant en outre l'étape consistant à identifier qu'il est établi qu'une première demande d'information dans la pluralité de demandes d'information concorde avec un premier document électronique dans la pluralité de documents électroniques ; envoyer un message à un dispositif informatique à distance indiquant que le premier document électronique concorde avec la première demande d'information ; laquelle première demande d'information est associée à un premier abonnement d'utilisateur portant sur des documents électroniques relatifs à la première demande d'information.

11. Article, comprenant un support d'enregistrement exploitable par machine sur lequel sont enregistrées des instructions pour faire en sorte qu'un appareil de traitement d'ordinateur exécute les étapes consistant à :
identifier une pluralité de documents électroniques (205) pour une recherche prospective par rapport à une pluralité de demandes d'information mémorisées prédéfinies, lesquels documents sont, au fur et à mesure de leur identification, mis en lot pour faire l'objet d'une recherche prospective groupée sous forme d'un lot incluant la pluralité de documents électroniques ;
générer un index (225) pour la pluralité de documents électroniques (205), laquelle étape consistant à générer un index comprend les étapes consistant à identifier une pluralité de jetons associés au contenu de documents électroniques (205) dans la pluralité de documents électroniques (205), l'index incluant un ou plusieurs enregistrements d'index correspondant chacun à un jeton dans la pluralité de jetons, et à identifier un ou plusieurs documents électroniques (205), dans la pluralité de documents électroniques (205), possédant le contenu associé au jeton ;
utiliser l'index pour établir, pour chaque document électronique (205) dans la pluralité de documents électroniques (205), si une ou plusieurs demandes d'information dans la pluralité de demandes d'information mémorisées prédéfinies concordent avec le document électronique (205), laquelle étape consistant à établir des demandes d'information concordantes dans la pluralité de demandes d'information mémorisées prédéfinies comprend les étapes consistant à :
identifier un ou plusieurs jetons dans une demande d'information particulière dans la pluralité de demandes d'information mémorisées prédéfinies ;
utiliser l'index pour identifier un ensemble de listes de pointage de jeton (425, 430) pour la demande d'information particulière, chacune desquelles listes de pointage de jeton correspond à un jeton identifié respectif dans la demande d'information particulière et identifie des documents électroniques possédant le contenu associé au jeton identifié respectif ;
comparer des listes de pointage de jeton dans l'ensemble de listes de pointage de jeton pour la demande d'information particulière pour établir si un ou plusieurs documents électroniques identifiés dans l'ensemble de listes de pointage de jeton sont communs parmi des listes de pointage de jeton dans l'ensemble de listes de pointage de jeton ; et
établir que la demande d'information particulière concorde avec des documents électroniques identifiés comme étant communs parmi des listes de pointage de jeton dans l'ensemble de listes de pointage de jeton.

12. Article selon la revendication 11, utilisable pour exécuter des étapes supplémentaires comprenant l'étape consistant à identifier, pour chaque demande d'information dans la pluralité de demandes d'information, quels documents électroniques de la pluralité de documents électroniques concordent avec la demande d'information.

13. Article selon la revendication 11 ou 12, dans lequel l'étape consistant à établir des demandes d'information concordantes dans la pluralité de demandes d'information mémorisées prédéfinies comprend les étapes consistant à :
identifier, pour chaque demande d'information dans la pluralité de demandes d'information, un ou plusieurs jetons inclus dans la demande d'information ;
établir, pour chaque jeton identifié, des documents électroniques spécifiques dans la pluralité de documents électroniques incluant le contenu associé au jeton identifié ; et
établir qu'un document électronique particulier est une concordance pour une demande d'information particulière dans la pluralité de demandes d'information en établissant, à partir de l'index, que le document électronique particulier inclut un ensemble de jetons associé correspondant à des paramètres associés à la demande d'information particulière.

14. Article selon l'une quelconque des revendications 11 à 13, sur lequel sont en outre enregistrées des instructions pour faire en sorte qu'un appareil de traitement d'ordinateur exécute les étapes du procédé selon l'une quelconque des revendications 1 à 10.

15. Système, comprenant :
au moins un serveur hébergeant un index d'une pluralité de demandes d'information portant sur une ou plusieurs ressources électroniques ;
un moteur de recherche prospective, hébergé par au moins un serveur comprenant un processeur, le moteur de recherche prospective comprenant :
un outil d'indexation de documents (210) conçu pour identifier un lot de documents électroniques (205), incluant une pluralité de documents électroniques (205), et pour créer un index (225) pour le lot, l'index incluant, pour chacun de la pluralité de documents électroniques (205), un ou plusieurs enregistrements d'index identifiant au moins un jeton associé au contenu du document électronique correspondant ;
un outil de concordance prospective de lot conçu pour identifier, pour chaque demande d'information dans la pluralité de demandes d'information, un ou plusieurs jetons inclus dans la demande d'information, pour établir, pour chaque jeton identifié, des documents électroniques spécifiques (205) dans la pluralité de documents électroniques (205) qui incluent le contenu associé au jeton identifié, et pour établir qu'un document électronique particulier est une concordance pour une demande d'information particulière dans la pluralité de demandes d'information en établissant, à partir de l'index, que le document électronique particulier (205) inclut un ensemble de jetons associé correspondant à des paramètres associés à la demande d'information particulière, l'établissement d'une demande d'information concordante dans la pluralité de demandes d'information consistant à :
utiliser l'index pour identifier un ensemble de listes de pointage de jeton (425, 430) pour la demande d'information particulière, chacune desquelles listes de pointage de jeton correspond à un jeton identifié respectif dans la demande d'information particulière et identifie les documents électroniques incluant le contenu associé au jeton identifié respectif ;
comparer des listes de pointage de jeton dans l'ensemble de listes de pointage de jeton pour la demande d'information particulière pour établir si un ou plusieurs documents électroniques identifiés dans l'ensemble de listes de pointage de jeton sont communs parmi des listes de pointage de jeton dans l'ensemble de listes de pointage de jeton ; et
établir que la demande d'information particulière concorde avec des documents électroniques identifiés comme étant communs parmi des listes de pointage de jeton dans l'ensemble de listes de pointage de jeton,
lequel système est en outre éventuellement conçu pour exécuter l'un quelconque des procédés selon les revendications 1 à 10.
